(19) Europäisches Patentamt
European Patent Office
Office européen des brevets

(11) EP 2 876 879 B1

(12) **EUROPEAN PATENT SPECIFICATION**

(45) Date of publication and mention of the grant of the patent:
**13.09.2017 Bulletin 2017/37**

(51) Int Cl.:
***H04N 13/04*** *(2006.01)* ***H04N 13/00*** *(2006.01)*
***G02B 27/22*** *(2006.01)* ***G02B 27/00*** *(2006.01)*

(21) Application number: **14193941.3**

(22) Date of filing: **19.11.2014**

(54) **Compensation technique for viewer position in autostereoscopic displays**

Kompensationstechnik für Betrachterposition in autostereoskopischen Anzeigen

Technique de compensation de position de visualisation dans des affichages autostréréoscopiques

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.11.2013 US 201361907931 P**
**05.11.2014 US 201414534121**

(43) Date of publication of application:
**27.05.2015 Bulletin 2015/22**

(73) Proprietor: **Samsung Display Co., Ltd.**
**Gyeonggi-do (KR)**

(72) Inventor: **Hoffman, David M.**
**San Jose, CA California 95112 (US)**

(74) Representative: **Dr. Weitzel & Partner**
**Patent- und Rechtsanwälte mbB**
**Friedenstrasse 10**
**89522 Heidenheim (DE)**

(56) References cited:
**EP-A2- 2 835 972** **WO-A1-2011/111349**
**JP-A- 2012 003 123** **US-A1- 2011 109 619**
**US-A1- 2012 038 635** **US-A1- 2012 200 676**
**US-A1- 2013 106 843**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 876 879 B1

## Description

## BACKGROUND

EP 2835972 A2 is a document according to Article 54 (3) EPC and describes a stereoscopic display including a sensor configured to detect head roll of a viewer; and an image renderer coupled to the sensor and configured to adjust a 3D image according to the detected head roll.

US 2012/0038635 A1 describes methods and systems for displaying a three dimensional image to a rotated viewer. The roll and yaw of a viewer's eyes, with respect to a display, is tracked and used to adjust the orientation of a pair of stereoscopic images so as to maintain a three dimensional image when a viewer is rotated.

Stereoscopic image displays, or 3D displays, have become increasingly popular for use in, for example, home televisions, movie theaters, portable display devices, etc. These 3D displays provide an immersive experience for a viewer by allowing the viewer to perceive depth to the displayed images. While some stereo image displays require the use of special eyewear in order to perceive 3D images, autostereoscopic ("autostereo") displays are 3D displays in which no special eyewear is needed in which each eye can see a different image.

Generally, image content for 3D displays is created with the expectation that the viewer will watch the images with their head in a vertical upright position (e.g., with no head roll), and from a position directly in front of the display (e.g., with no oblique viewing position) relative to the screen. However, if the viewer desires to relax their posture and view the 3D images with their head in a non-vertical position (e.g., with head roll), the viewer may perceive a loss of the depth sensation, and may experience image crosstalk, eyestrain, and/or discomfort. Also, if the viewer is at a position other than directly in front of the display (e.g., at an oblique viewing position), the 3D images may appear to shear (or skew) towards the viewer, and may appear distorted.

The above information disclosed in this Background section is only for enhancement of understanding of the background of the invention and therefore it may contain information that does not form the prior art that is already known to a person of ordinary skill in the art.

## SUMMARY

It is the object of the present invention to provide a possibility for a viewer who desires to relax his/her posture and view the 3D images with his/her head in a non-vertical position without perceiving any image distortion, without perceiving a loss of the depth sensation and without experiencing image cross talk, eyestrain and/or discomfort. This object is achieved by the subject matter of independent claims 1 and 8. Preferred embodiments are defined in the sub claims.

According to an embodiment of the present invention, a display includes: a sensor coupled to the display to detect a first position corresponding to an eye of a first viewer; and an image renderer coupled to the sensor to adjust a first 3D image to be displayed towards the eye of the first viewer according to the first position.

The sensor may detect a headroll of the first viewer, and the image renderer may adjust the first 3D image according to the headroll of the first viewer.

The sensor may detect an oblique angle between the first position and the display, and the image renderer may apply a keystone distortion to the first 3D image to generate a keystone distorted first 3D image in response to the detecting of the oblique angle.

The sensor may detect a headroll of the first viewer, and the image renderer may adjust the keystone distorted first 3D image according to the headroll of the first viewer.

The sensor may detect a second position corresponding to an eye of a second viewer, and the image renderer may adjust a second 3D image to be displayed towards the eye of the second viewer according to the second position.

The sensor may detect a vertical overlap between the eye of the first viewer and the eye of the second viewer, the eye of the first viewer may be a left eye or a right eye, and the eye of the second viewer may be a right eye when the eye of the first viewer is the left eye, and the eye of the second viewer may be a left eye when the eye of the first viewer is the right eye, and the image renderer may adjust the first 3D image according to the first position, and may adjust the second 3D image according to the second position.

The sensor may detect a headroll of the first viewer and a headroll of the second viewer, and the image renderer may adjust the first 3D image according to the headroll of the first viewer, and may adjust the second 3D image according to the headroll of the second viewer.

The display may further include: an optical layer overlapping the display and arranged to direct light to be emitted by pixels toward the eye of the first viewer to display the first 3D image.

The optical layer may include a lenticular array or a lenticular lens.

Only the pixels that emit light directed toward the eye of the first viewer may be utilized to display the first 3D image.

According to another embodiment of the present invention, a method for adjusting a 3D image includes: detecting, by a sensor, a first position corresponding to an eye of a first viewer; and adjusting, by an image renderer coupled to the sensor, a first 3D image to be displayed towards the eye of the first viewer according to the first position.

The method may further include: detecting, by the sensor, a headroll of the first viewer; and adjusting, by the image renderer, the first 3D image according to the headroll of the first viewer.

The method may further include: detecting, by the sensor, an oblique angle between the first position and a display; and applying, by the image renderer, a keystone distortion to the first 3D image to generate a keystone distorted first 3D image in response to the detecting of the oblique angle.

The method may further include: detecting, by the sensor, a headroll of the first viewer; and adjusting, by the image renderer, the keystone distorted first 3D image according to the headroll of the first viewer.

The method may further include: detecting, by the sensor, a second position corresponding to an eye of a second viewer; and adjusting, by the image renderer, a second 3D image to be displayed towards the eye of the second viewer according to the second position.

The method may further include: detecting, by the sensor, a vertical overlap between the eye of the first viewer and the eye of the second viewer, the eye of the first viewer may be a left eye or a right eye, and the eye of the second viewer may be a right eye when the eye of the first viewer is the left eye, and the eye of the second viewer may be a left eye when the eye of the first viewer is the right eye; and adjusting, by the image renderer, the first 3D image according to the first position, and the second 3D image according to the second position.

The method may further include: detecting, by the sensor, a headroll of the first viewer and a headroll of the second viewer; and adjusting, by the image renderer, the first 3D image according to the headroll of the first viewer, and the second 3D image according to the headroll of the second viewer.

The method may further include: directing, by an optical layer overlapping a display, light being emitted by pixels toward the eye of the first viewer to display the first 3D image.

The optical layer may include a lenticular array or a lenticular lens.

Only the pixels that emit light directed toward the eye of the first viewer may be utilized to display the first 3D image.

## BRIEF DESCRIPTION OF THE DRAWINGS

The above and other aspects and features of the present invention will become apparent to those skilled in the art from the following detailed description of the example embodiments with reference to the accompanying drawings.

FIGS. 1A and 1B are perspective views illustrating lines of vision in relation to a 3D display surface respectively corresponding to the absence and presence of head roll.

FIG. 2A illustrates adjustment of a disparity map of a stereoscopic image in response to head roll, according to some embodiments of the present invention, and FIG. 2B is a polar graph illustrating disparity magnitude as a function of head roll, according to some of the embodiments of the present invention shown in FIG. 2A.

FIG. 3A illustrates adjustment of a disparity map of a stereoscopic image in response to head roll, according to some embodiments of the present invention, and FIG. 3B is a polar graph illustrating disparity magnitude as a function of head roll, according to some of the embodiments of the present invention shown in FIG. 3A.

FIG. 4A illustrates adjustment of a disparity map of a stereoscopic image in response to head roll, according to some embodiments of the present invention, and FIG. 4B is a polar graph illustrating disparity magnitude as a function of head roll, according to some of the embodiments of the present invention shown in FIG. 4A.

FIG. 5 illustrates an operation for warping/modifying a stereoscopic image in response to head roll, according to some embodiments of the present invention.

FIG. 6 illustrates an operation for warping a stereoscopic image in response to head roll according to some embodiments of the present invention.

FIG. 7 illustrates an autostereo display for viewing a stereoscopic 3D image according to some embodiments of the present invention.

FIGS. 8 through 9D illustrate autostereoscopic angular control principles of an autostereo display.

FIG. 10 is a flow chart illustrating a method for adjusting autostereoscopic images according to some embodiments of the present invention.

FIGS. 11A through 12D are perspective views illustrating object shearing (or skewing) from a viewing surface of a 3D display respectively corresponding to an oblique viewing position of a viewer with respect to the viewing surface of the 3D display.

FIGS. 13A and 13B are perspective views illustrating keystone distortion applied to stereoscopic images corresponding to an oblique viewing position according to some embodiments of the present invention.

FIG. 14 is a flow chart illustrating a method for applying keystone distortion to autostereoscopic images for a viewer at an oblique viewing position according to some embodiments of the present invention.

FIG. 15 illustrates adjusting stereoscopic images for head roll and oblique viewing position of multiple viewers of a multi-viewer autostereo display according to some embodiments of the present invention.

FIG. 16 illustrates a light field display according to some embodiments of the present invention.

FIGS. 17A through 17B illustrate a light field display according to some embodiments of the present invention.

FIG. 18 illustrates a case of vertically offset viewers viewing an autostereo display having defined horizontal viewing zones according to some embodiments of the present invention.

FIG. 19 illustrates a case of vertically offset viewers viewing an autostereo display having custom horizontal and vertical viewing zones for vertically offset viewers according to some embodiments of the present invention.

FIG. 20 is a flow chart illustrating a method for applying head roll adjustment and keystone distortion compensation to autostereoscopic images for multiple viewers according to some embodiments of the present invention.

## DETAILED DESCRIPTION

Hereinafter, example embodiments will be described in more detail with reference to the accompanying drawings, in which like reference numbers refer to like elements throughout. The present invention, however, may be embodied in various different forms, and should not be construed as being limited to only the illustrated embodiments herein. Rather, these embodiments are provided as examples so that this disclosure will be thorough and complete, and will fully convey some of the aspects and features of the present invention to those skilled in the art. Accordingly, processes, elements, and techniques that are not necessary to those having ordinary skill in the art for a complete understanding of the aspects and features of the present invention are not described with respect to some of the embodiments of the present invention. Unless otherwise noted, like reference numerals denote like elements throughout the attached drawings and the written description, and thus, descriptions thereof will not be repeated. In the drawings, the relative sizes of elements, layers, and regions may be exaggerated for clarity.

It will be understood that, although the terms "first," "second," "third," etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section described below could be termed a second element, component, region, layer or section, without departing from the scope of the present invention.

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "comprises" and/or "comprising," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the present invention refers to "one or more embodiments of the present invention." Also, the term "exemplary" is intended to refer to an example or illustration.

It will be understood that when an element or layer is referred to as being "on," "connected to," "coupled to," or "adjacent to" another element or layer, it can be directly on, connected to, coupled to, or adjacent to the other element or layer, or one or more intervening elements or layers may be present. However, when an element or layer is referred to as being "directly on," "directly connected to," "directly coupled to," or "immediately adjacent to" another element or layer, there are no intervening elements or layers present.

The discomfort and the degradation of the 3D experience that result from viewing a 3D image with a tilted head (e.g., a head "roll," as in yaw, pitch, and roll) is primarily due to 3D image content being conventionally designed for horizontally separated eyes that are aligned with the horizontal axis of the display. That is, the separation, or disparity, between a right image and a left image (e.g., a right eye image and a left eye image) of a given 3D image is conventionally designed to be in a horizontal direction such that horizontally disparate points of the right and left images fall within the same lateral plane as the eyes of a viewer with no head roll. In other words, the interocular axis of the viewer (e.g., a line connecting both eyes of the viewer, passing through the center of both eyes, and rotating about a point between both eyes) is parallel to an axis corresponding to the disparity (e.g., positional disparity) of the left image and the right image of the 3D image.

Disparity of a 3D image, as used herein, refers to the difference in physical location on a display between a left image and a right image, which combine to form a 3D image. The right image and the left image are typically similar images, except for a difference in physical locations of the right and left images on a display. The disparity between the left image and the right image includes a direction, for example, the general direction on the display in which the right image is separate from the left image, or vice versa. As discussed above, related 3D displays only incorporate a horizontal direction of disparity between right and left images.

The direction of disparity between a left image and a right image may correspond to differences in set reference points between the left image and the right image. For example, the direction of disparity between a left image and a right image may refer to the common direction of disparities between every pixel of the right image and every pixel of the left image.

The disparity between the left image and the right image also includes a magnitude, that is, the amount of separation between the two images. A magnitude of disparity between a left image and a right image of a 3D image may vary throughout the 3D image (e.g., from pixel to pixel), depending on the desired 3D effect of certain points of the 3D image corresponding to the degree of depth that is intended to be conveyed.

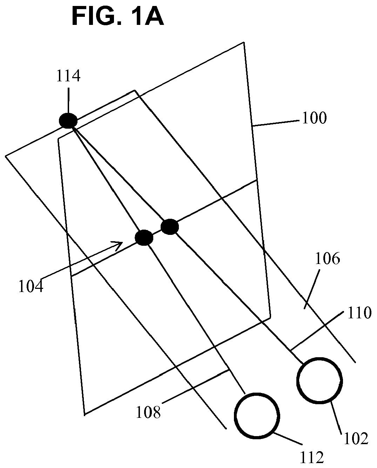

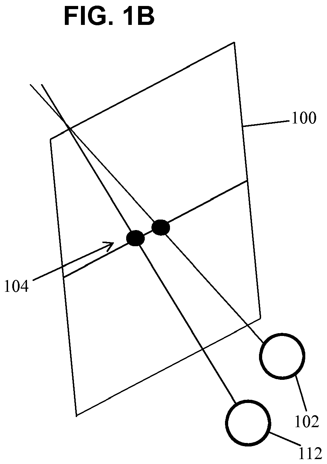

FIGS. 1A and 1B are perspective views illustrating lines of vision in relation to a 3D display surface respectively corresponding to the absence and presence of head roll.

FIG. 1A illustrates a situation where a viewer watches a 3D display surface 100 with no head roll. The viewer's left eye 112 and right eye 102 are horizontal, and are in the same plane 106 as two horizontally depicted disparate points 104. These disparate points 104, which are shown respectively to the left eye 112 and the right eye 102, cause a 3D effect, wherein the leftmost of the disparate points 104 is perceived by the left eye 112, and not the right eye 102, and wherein the rightmost of the disparate points 104 is perceived by only the right eye 102. When there is no head roll, the viewer may fixate on the disparate points 104 with a simple horizontal convergence eye movement, as illustrated by right eye line of vision 110 laterally converging with left eye line of vision 108. The right eye line of vision 110 and the left eye line of vision 108 eventually intersect behind the 3D display surface 100 at focal point 114, which corresponds to a 3D point to the viewer that is perceived as being farther than the surface of the display 100.

FIG. 1B illustrates a situation where a viewer watches the 3D display surface 100 with head roll (e.g., a head that is tilted with respect to the orientation of the display). FIG. 1B illustrates head roll to the left, as the viewer's left eye 112 is at a height that is closer to the location of the bottom of the display 100 when compared with the right eye 102. The right eye 102 and the left eye 112 do not lie in the same plane as the disparate points 104. Here, because the left eye 112 is at a different elevation than that of the right eye 102 due to the head roll, vertical convergence occurs, that is, the left eye rotates upwards while the right eye rotates downwards. Eye movement associated with the vertical convergence while viewing stereoscopic images may lead to adverse effects such as eyestrain, double images, and loss of depth. For example, one reason for loss of depth may be that the vectors (or rays) going from the right eye 102 and left eye 112 through the disparate points 104 do not intersect at any location in space.

Accordingly, to compensate for the vertical convergence occurring and failure of the vectors from intersecting during head roll while viewing a 3D display, in some embodiments of the present invention, disparities of 3D images generated by the 3D display are adjusted, thereby reducing the negative effects of head roll associated with related 3D display devices.

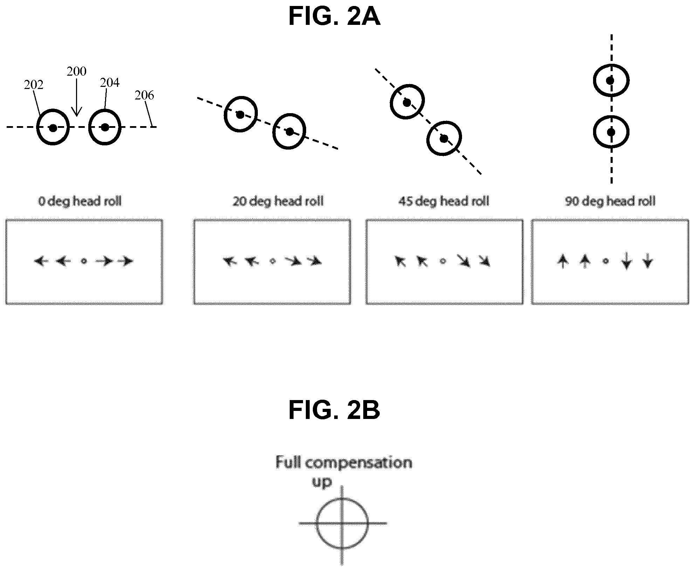

FIG. 2A illustrates adjustment of a disparity map of a stereoscopic image in response to head roll, according to some embodiments of the present invention, and FIG. 2B is a polar graph illustrating disparity magnitude as a function of head roll, according to some of the embodiments of the present invention shown in FIG. 2A.

FIG. 2A illustrates one approach that may be used to adjust a disparity map according to a detected head roll angle, according to some embodiments of the present invention. FIG. 2A shows how disparities of a given 3D image are adjusted in response to specific degrees of head roll in accordance with the present embodiment. The arrows of the 3D image indicate a direction of shift between a corresponding feature in the right and left eyes (e.g., the direction of disparity between the left and right images of the 3D image). FIG. 2A illustrates a representation of head roll for a viewer 200 including left eye 202, right eye 204, and interocular axis 206, such that the illustrated depictions of head roll occur from the left-hand side to the right-hand side for the viewer 200 of the 3D image.

Referring to FIG. 2A, the disparities of the 3D image are rotated and adjusted depending on the degree of head roll detected, that is, the disparities follow the same orientation as the detected head roll, such that the direction of the disparities and the interocular axis 206 are parallel. Additionally, the adjustment technique according to this embodiment of the present invention maintains the disparity magnitudes of each disparity irrespective of the angle of head roll. For example, and as shown in FIG. 2A, a 0-degree head roll (e.g., when a viewer does not exhibit any head roll) corresponds to no change in disparity orientation (e.g., 0-degree rotation of disparity) because the viewer 200 is viewing the 3D image as intended, and thus, there is no need for adjustment of the 3D image. However, a 20-degree, 45-degree, and 90-degree head roll cause the disparities of the 3D image to respectively rotate 20 degrees, 45 degrees, and 90 degrees, as shown in FIG. 2A. A disparity rotation in an opposite direction from that of the above described rotation may occur if the head roll occurs in the opposite direction (e.g., from the right-hand side to the left-hand side of the viewer), with the degree of rotation of the disparities corresponding to the degree of the head roll.

Referring to FIG. 2B, the magnitude of the disparities remains constant for all head roll angles, which results in preservation of full depth sensation regardless of the position of the viewer's head. This feature of constant disparity magnitude is also reflected in FIG. 2A by the disparity vectors/arrows having constant length for all head roll angles.

According to this embodiment, the 3D image horizontal direction remains unchanged, and the disparity vector is adjusted to have the same or substantially the same angle as the rolled head position, such that no vertical convergence eye movement occurs, thereby reducing the negative effects experienced by the viewer 200. For example, a disparate point for the right eye may be shifted 20 pixels horizontally to the right of the corresponding pixel for the left eye. In the case of a head roll to the right by 45 degrees (in which the head is inclined towards the right shoulder) the disparate point for the left eye may remain in place while the right point is shifted 45 degrees clockwise along a circle with a radius of 20 pixels to a new location below and to the left of its initial location. However, some other embodiments of the present invention may alternatively shift the left eye image about the right eye image, or may shift both of the left eye image and the right eye image.

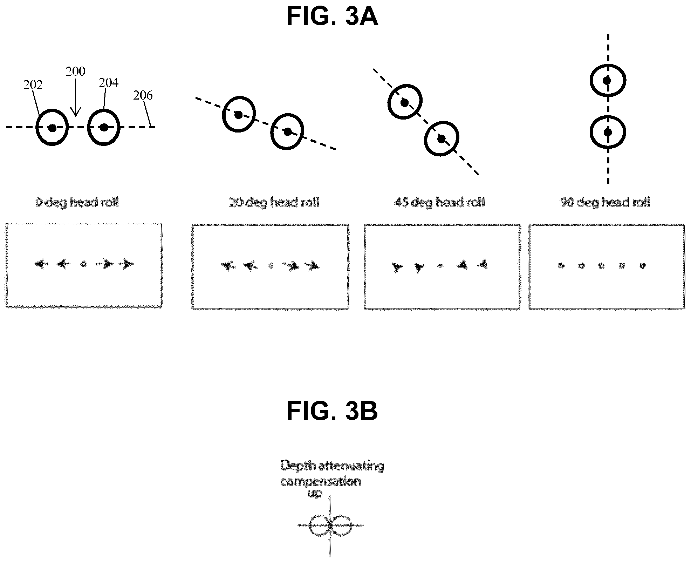

FIG. 3A illustrates adjustment of a disparity map of a stereoscopic image in response to head roll, according to some embodiments of the present invention, and FIG. 3B is a polar graph illustrating disparity magnitude as a function of head roll, according to some of the embodiments of the present invention shown in FIG. 3A.

Referring to FIG. 3A, the rotation of the disparities of the image is responsive to the head roll of the viewer in the same manner as that of some of the embodiments of the present invention described above in FIG. 2A. That is, the disparities are rotated to have a direction that remains parallel with the viewer's interocular axis 206. However, in contrast to the embodiment of FIGS. 2A and 2B, the present embodiment increasingly reduces the disparity magnitude of the 3D image as the degree of the viewer's head roll increases. At the extreme case when the head is rolled 90 degrees, the disparity magnitude may be fully attenuated. At this position, the images displayed to the right eye 202 and the left eye 204 are identical, and there is no depth sensation to the attenuated 3D image. FIG. 3A illustrates this attenuation of the magnitude of disparity. The disparity arrows/vectors reduce in length as the degree of head roll increases until there is no disparity, and complete attenuation of the disparity is depicted by the dots/circles that correspond to a 90 degree head roll. The polar plot of FIG. 3B also depicts the correlation of attenuation of disparity with an increase of the degree of head roll.

By adjusting the orientation of the disparities in conjunction with reducing their magnitudes as the degree of head roll increases, not only are vertical convergence eye movement and the associated negative effects reduced, but also image quality is maintained despite the increasing viewer head roll.

In some other embodiments of the present invention, the attenuation of the magnitude of the disparities is such that the disparities are not completely eliminated, but are instead limited to a fraction of the original depth (e.g., 10% of the original depth), thereby retaining some of the depth sensation at the more extreme head roll positions while still decreasing challenges associated with maintaining a desirable image quality.

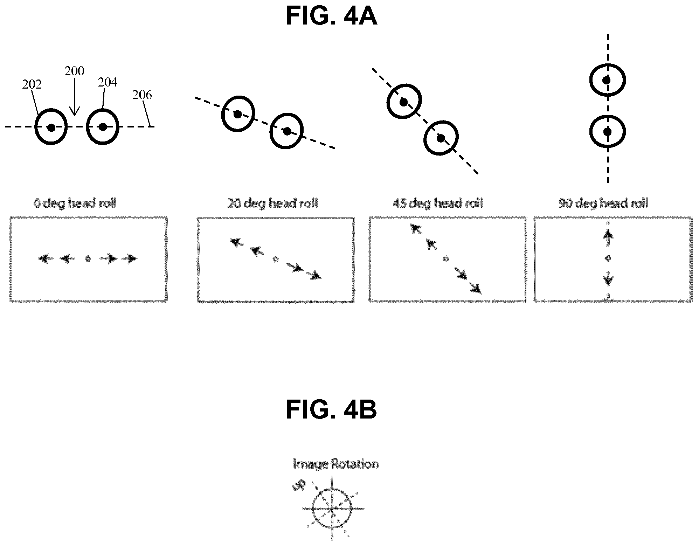

FIG. 4A illustrates adjustment of a disparity map of a stereoscopic image in response to head roll, according to some embodiments of the present invention, and FIG. 4B is a polar graph illustrating disparity magnitude as a function of head roll, according to some of the embodiments of the present invention shown in FIG. 4A.

Referring to FIG. 4A, instead of rotating individual disparities of a 3D image as shown in FIGS. 2A and 3A, the embodiment shown in FIG. 4A rotates an entire image (e.g., the 3D image) in response to head roll. FIG. 4A illustrates the rotation of a collective row of vectors/arrows (e.g., disparities) in response to the different degrees of head roll. The present embodiment concurrently rotates the right and left images on the display to match the head roll angle. Consequently, vertical eye convergence is decreased at any head roll angle, and no image deformities are introduced as there is no disparity adjustment/disparity warping process. In some embodiments of the present invention, the 3D image may be zoomed out to retain the full image as the image is rotated (e.g., so edges of the 3D image are not clipped due to portions of the 3D image rotating beyond the perimeter of the display). In other embodiments of the present invention, the image may be magnified, or "zoomed in," so that the display remains fully filled as the image is rotated (e.g., so the edges of the display screen can display content present in the 3D image, which may have an aspect ratio that is not 1:1).

Referring to FIG. 4B, the polar plot describes the constant magnitude of the disparities at any head roll angle. Additionally, the dotted axis lines depict an example of a new orientation of the image after rotation, with the top of the image indicated by "up." The dotted axis of FIG. 4B illustrates, for example, a new 45-degree orientation of the image after adjustment corresponding to a counterclockwise head roll of an angle of 45 degrees.

To achieve the rotation of disparities within a 3D image as described above with respect to FIGS. 2A and 3A, one of the right or left images of the 3D image may be warped/adjusted to attain the appropriate disparity direction. For simplicity, it will be assumed that the left image will remain unchanged by the image re-rendering process and that the right image will be modified according to embodiments of the present invention. However, some embodiments of the present invention may modify the left image and keep the right image unchanged, while other embodiments may modify both of the left and the right images.

For each pixel in the left image, the disparity specifies the position of the pixels in the right image, with the exception of occluded points. Thus, each pixel in the right image may be repositioned based on the nominal position in the left image, and based on the disparity estimated from the image pair.

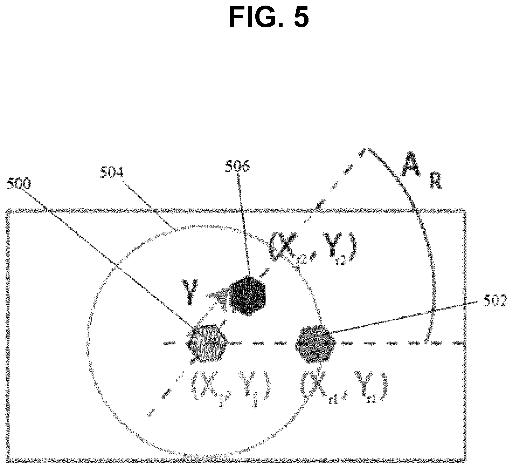

FIG. 5 illustrates an operation for warping/modifying a stereoscopic image in response to head roll, according to some embodiments of the present invention.

Given a measured disparity between a point shown in the right and left images, the position of the pixels in the right image are repositioned based on the disparity ($\Delta$), the gain factor ($\gamma$), and the head roll angle ($A_R$) with reference to the position of the left image. At the conclusion of the operation, all disparities will have the same orientation as that of the interocular axis of a viewer regardless of the gain factor.

Referring to FIG. 5, the warping operation is determined by the following formulas:

$$\text{Original Disparity: } \Delta = X_l - X_{r1}$$

$$\text{Disparity Gain Factor: } \gamma = 1 \text{ or } \gamma = \cos(A_R)$$

$$\text{Warped Right Image Position: } X_{r2} = X_l + \gamma\Delta{*}\cos(A_R);\ Y_{r2} = Y_l + \gamma\Delta{*}\sin(A_R)$$

Wherein $X_l$ and $Y_l$ represent X-Y coordinates of a pixel of an original left image, $X_{r1}$ and $Y_{r1}$ represent X-Y coordinates of a pixel of an original right image, $X_{r2}$ and $Y_{r2}$ represent X-Y coordinates of a warped/adjusted pixel of a right image, $A_R$ represents an angle of head roll of a viewer, and $\gamma$ represents a disparity gain factor.

The warping operation according to the present embodiment calculates the new right eye view based on the left eye view.

The above equations describe one method of warping a left image to create a new right image according to an embodiment of the present invention. Other embodiments may utilize other formulas to achieve warping.

In cases in which an edge of an object of an image is shifted, the shifting may occlude or unocclude a region behind it. In cases of occlusion, information may be simply discarded as a result. In cases of unocclusion, the missing information may be estimated to avoid holes in the image. Texture in-filling algorithms may be used to fill the unoccluded regions with statistically similar texture as that of the regions abutting the unoccluded regions. The infilling techniques may include texture stretching, statistical texture generation, texture copying, or other techniques know to those skilled in the art.

Although the warping operation embodied by the above equations is effective in generating a desired magnitude and direction of disparity, the warping may introduce artifacts into an image. After a rotation, some edges of objects may shift and may occlude other content, or may reveal or unocclude portions of the image for which there is no valid information in the original right image.

In cases where a shifted edge occludes other content, it is desirable that these shifted pixels overwrite the occluded values. On the other hand, in situations in which a hole is opened in the image, a variety of techniques known in the art may be utilized to fill in the missing portions of the image, such as texture extrapolation of the unoccluded surface, recruitment of the missing pixel values from the left image, any of the infilling techniques mentioned above, or any other technique known to those skilled in the art.

In the present embodiment, the original disparity $\Delta$ is characterized by $X_l$ - $X_{r1}$, which is the disparity between the X-coordinate of the pixel of the left image and the X-coordinate of the pixel of the right image. This equation simply embodies the concept of disparity as discussed throughout the application, that is, the concept of localized positional differences between the right and left images.

Furthermore, the disparity gain factor ($\gamma$) may be 1 or may be $\cos(A_R)$ depending on whether full disparity is maintained at all head roll angles, or whether the disparity is attenuated according to the degree of head roll, respectively. The concepts of full disparity and attenuated disparity are discussed above with reference to FIGS. 3 and 4, respectively. The function of the disparity gain factor ($\gamma$) is that it decreases the amount and severity of artifacts that may occur with image warping as the degree of head roll increases.

For example, a person having ordinary skill in the art may attempt to limit disparity to less than 3% of the screen width. For a resolution that is 1920 pixels wide, this would correspond to about 60 pixels. Under an extreme head roll, it is possible to have a region as wide as 60 pixels that has been unoccluded, which presents an opportunity for objectionable artifacts. By throttling back the depth in proportion to the magnitude of the head roll, it is possible to greatly reduce the size of these regions that may be filled in.

Referring to FIG. 5, coordinates of a left image pixel 500 ($X_l$, $Y_l$) and coordinates of an original right image pixel 502 ($X_{r1}$, $Y_{r1}$) are shown. Circle 504 represents the full magnitude of the disparity, that is, the original disparity between the left image pixel 500 and the original right image pixel 502. During the warping process of the present embodiment, the left image pixel 500 remains static as the right image pixel 502 is warped about, or relocated with respect to, the left image pixel 500 corresponding to the degree of head roll ($A_R$) of a viewer, thereby relocating the original left image pixel 500 to its new position shown by adjusted right image pixel 506. Additionally, the magnitude of the disparity between the left image pixel 500 and the adjusted right image pixel 506 is attenuated (when compared to the disparity between the left image pixel 500 and the original right image pixel 502) by the disparity gain factor (γ), as illustrated by the adjusted right image pixel 506 not being located on the full magnitude circle 504, which has a radius that is equal to the distance between the left image pixel 500 and the original right image pixel 502.

In some embodiments of the present invention, the operation for warping a stereoscopic image in response to head roll, as shown in FIG. 5 and as embodied by the above equations, may be used in situations with large head roll (e.g., $A_R$ greater than about 45 degrees) or strong attenuation (e.g., γ less than about 0.5). As shown in FIG. 5, the location of the adjusted right image pixel 506 is closer to the left image pixel 500 than it is to the original right image pixel 502.

Those having skill in the art will understand that the above operation for warping/modifying a stereoscopic image in response to head roll according to the embodiment of the present invention shown in FIG. 5 is not limited to warping a single pixel or a single point of an image, as the warping of a single pixel as disclosed above is merely used for purposes of demonstration. The operation of the present embodiment may be applied to any disparity map having any number of points or pixels of disparity between a right image and a left image (e.g., a complex disparity map).

In the embodiment of the present invention shown in FIG. 5, the pixels of the left image are warped to create the adjusted right image. Also, after the adjusted disparity map having the adjusted right image pixel 506 is generated, the original right image pixel 502 is no longer used for displaying a 3D image. And by extension, after the adjusted disparity map is generated, the original right image is no longer used for displaying a 3D image. One exception is that the original right image may be used for infilling unoccluded regions.

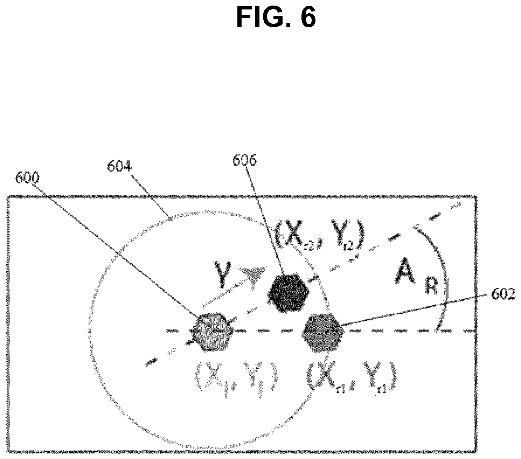

FIG. 6 illustrates an operation for warping a stereoscopic image in response to head roll according to some embodiments of the present invention.

Referring to FIG. 6, the warping operation is determined by the following formulas:

$$\text{Original Disparity: } \Delta = X_l - X_{r1}$$

$$\text{Disparity Gain Factor: } \gamma = 1 \text{ or } \gamma = \cos(A_R)$$

$$\text{Warped Right Image Position: } X_{r2} = Xr_1 - \Delta^*\sqrt{}[1 + \gamma^2 - 2\gamma * \cos(A_R) - \gamma^2\sin^2(A_R)];$$

$$Y_{r2} = Y_l + \gamma\Delta^*\sin(A_R)$$

Wherein $X_l$ and $Y_l$ represent X-Y coordinates of a pixel of an original left image, $X_{r1}$ and $Y_{r1}$ represent X-Y coordinates of a pixel of an original right image, $X_{r2}$ and $Y_{r2}$ represent X-Y coordinates of a warped/adjusted pixel of a right image, $A_R$ represents an angle of head roll of a viewer, and γ represents a disparity gain factor.

The warping operation according to the present embodiment of the present invention calculates the new right-eye view based on the original right-eye view, thereby using less aggressive image warping in instances of small viewer head roll, as compared to some of the embodiments of the present invention shown in FIG. 5.

Locations of a left image pixel 600 ($X_l$, $Y_l$) and an original right image pixel 602 ($X_{r1}$, $Y_{r1}$) are shown. Circle 604 represents the full magnitude of the disparity (e.g., the original disparity) between the left image pixel 600 and the original right image pixel 602. During the warping process of the present embodiment, the left image pixel 600 remains static, while the right image pixel 602 is warped about, or moved with respect to, the right image pixel 602 corresponding to the degree of head roll ($A_R$) of a viewer, thereby relocating the original right image pixel 602 to its new position depicted by adjusted right image pixel 606. Additionally, the magnitude of the disparity between the left image pixel 600 and the adjusted right image pixel 606 is attenuated (when compared to the disparity between the left image pixel 600 and the original right image pixel 602) by the disparity gain factor (γ), as illustrated by the adjusted right image pixel 606 not being located on the full magnitude circle 604.

In some embodiments of the present invention, the operation for warping a stereoscopic image in response to head roll, as shown in FIG. 6 and as embodied by the above equations, may be used in situations with relatively minor head roll (e.g., $A_R$ less than about 45 degrees) or weak attenuation (e.g., γ greater than about 0.5). As shown in FIG. 6, the location of the adjusted right image pixel 606 is closer to the original right image pixel 602 than it is to the left image pixel 600.

Those having skill in the art will understand that the above operation for warping/modifying a stereoscopic image in response to head roll according to the embodiment of the present invention shown in FIG. 6 is not limited to warping a single pixel or a single point of an image, as the warping of a single pixel as disclosed above is merely used for purposes of demonstration. The operation of the present embodiment may be applied to any disparity map having any number of points or pixels of disparity between a right image and a left image (e.g., a complex disparity map).

In the embodiment of the present invention shown in FIG. 6, the pixels of the original right image are warped to create the adjusted right image. The left image is used for the disparity map estimation, but the adjusted right image is based on a warp of the original right image. And after a disparity map using an adjusted right image is generated, and the adjusted right image has been rendered, the original right image is no longer used for displaying a 3D image.

In another embodiment of the present invention, the image warping may be based predominately on the right view, but regions from the original left image may be used to fill in texture in unoccluded regions of the warped right image.

Furthermore, the embodiments of the present invention shown in FIGS. 5 and 6 may be combined or used in conjunction in other embodiments of the present invention. For example, in an embodiment of the present invention, the warping operation shown in FIG. 5 may be used in situations where viewer head roll is greater than or equal to about 45 degrees, while the warping operation shown in FIG. 6 may be used in situations where viewer head roll is less than about 45 degrees.

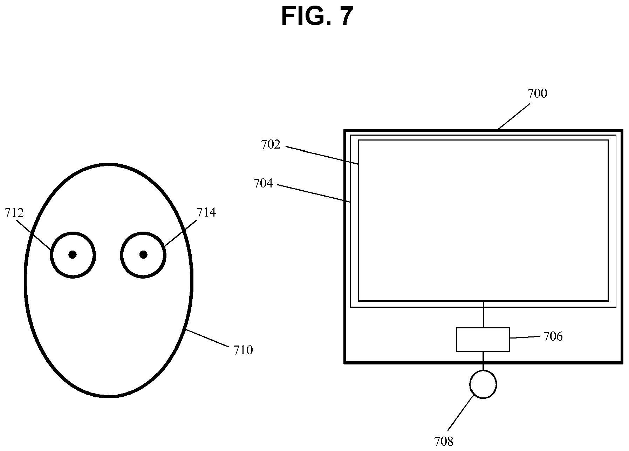

FIG. 7 illustrates an autostereo display for viewing a stereoscopic 3D image according to some embodiments of the present invention. An autostereo display is a 3D display in which special eyewear is not used to perceive the 3D image.

Referring to FIG. 7, an autostereo display 700 may be any suitable autostereoscopic display (e.g., lenticular lens display, parallax barrier display, light field display, etc.). For example, as shown in FIG. 7, the autostereo display 700 may include a display area 702, an optical layer 704 (e.g., a lenticular array, opaque barrier, etc.), and an image renderer 706. However, the present invention is not limited thereto.

When the optical layer 704 includes a lenticular array, the lenticular array may include a plurality of tightly spaced lenses that are cylindrically or spherically shaped, and are arranged such that they are repeating one dimensionally (e.g., in a horizontal direction) or repeating two dimensionally (e.g., in a horizontal and vertical direction).

The image renderer 706 may calculate disparity maps for 3D images displayed on the autostereo display 700. The image renderer 706 may also adjust or compensate the calculated disparity maps to generate 3D images based on the adjusted/compensated disparity maps. The image renderer 706 may calculate the adjusted disparity maps based on detected viewer head roll information and/or oblique viewing position sent to the image renderer 706 from, for example, an optical tracking sensor 708. After the image renderer 706 generates 3D images having adjusted disparities according to the viewer head roll and/or oblique viewing position, the image renderer 706 sends the adjusted 3D images to the display area 702 for viewing.

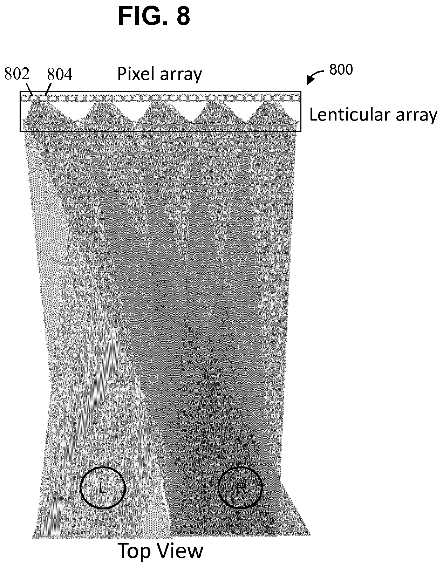

As will be described in further detail below with reference to FIGS. 8 through 9D, the display area 702 may include a plurality of viewing zones (e.g., sweet spots) for displaying a left-eye image and a right-eye image through the optical layer 704.

The autostereo display 700 may be coupled to the optical tracking sensor 708. In some embodiments, the optical tracking sensor 708 may be a camera or other imaging device that is used in conjunction with face detection algorithms to detect a viewing position (e.g., corresponding to an oblique viewing position), an orientation of the viewer's head 710 (e.g., corresponding to head roll), position corresponding to the viewer's right eye 712 and left eye 714, and/or a number of different viewers (e.g., multiple viewers). The position corresponding to the viewer's right eye 712 and left eye 714 may be detected in any suitable manner, for example, the actual positions of the right eye 712 and left eye 714 may be detected, or some other feature of the viewer (e.g., nose, mouth, ears, etc.) may be detected and the position of the right eye 712 and left eye 714 may be estimated (e.g., calculated) therefrom.

FIGS. 8 through 9D illustrate autostereoscopic angular control principles of an autostereo display.

Referring to FIG. 8, in the autostereo display 800, a subset of pixels 802 and 804 of a pixel array are respectively visible to a right eye R and a left eye L of a viewer due to the geometrical configuration of the pixels 802 and 804 in the pixel array, and due to an optical layer, such as, for example, a lenticular array or an opaque barrier, that is positioned between the pixel array and the viewer. Within certain zones (or "sweet spots") in front of the autostereo display 800, each eye L and R of the viewer respectively sees corresponding images. In related autostereo displays, these zones are horizontally narrow and have a limited depth, but have an elongated height.

In typical eye-tracking autostereo displays, a camera may detect where a viewer is located with respect to a front of the display to ensure that the appropriate right and left views are visible from the respective viewing zones where the right and left eyes are located. For example, the display may allocate right and left images to the pixels in the viewing zones where the right and left eyes are located, respectively.

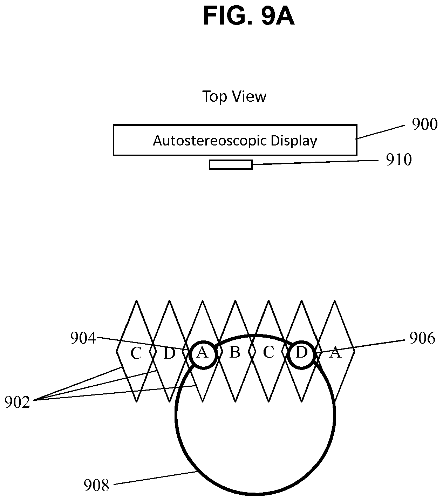

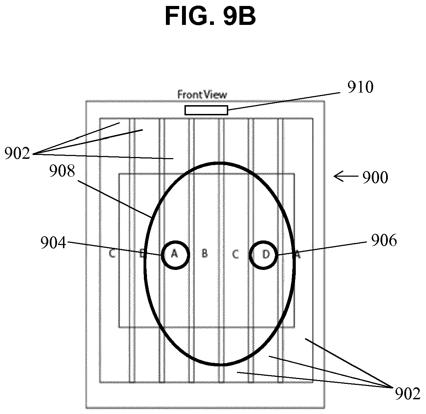

FIGS. 9A through 9B illustrate an example of a viewer 908 of an autostereo display 900 that has no head roll. Referring to FIGS. 9A through 9B, the autostereo display 900 includes viewing zones 902 and a camera 910 for tracking the position of the viewer 908 in front of the display 900. FIG. 9A depicts the viewer 908 from the top facing the autostereo display 900, and FIG. 9B depicts the viewer 908 from the back of the viewer 908 (that is, the display is shown through an outline representing the viewer 908). The viewer's interocular axis between the viewer's left eye 904 and the viewer's right eye 906 is horizontal, indicating that the viewer 908 does not exhibit any head roll. The viewer's left eye 904 is positioned in viewing zone A, and the viewer's right eye 906 is positioned in viewing zone D, as the viewer 908 watches the autostereo display 900.

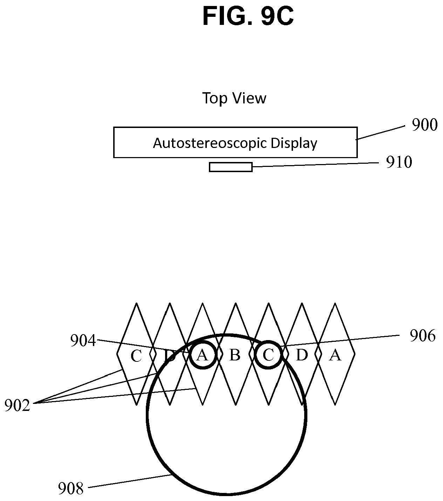

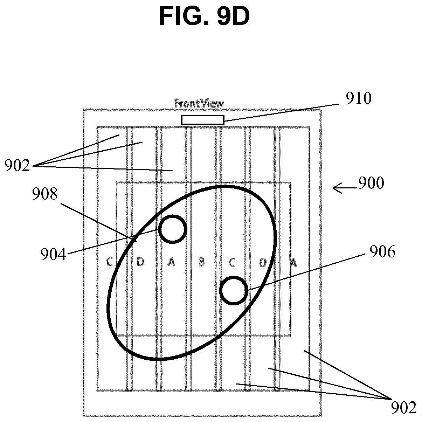

FIGS. 9C through 9D illustrate an example of head roll of the viewer 908 of the autostereo display 900. Referring to FIGS. 9C and 9D, the viewer 908 exhibits head roll to the viewer's right-hand side (e.g., the viewer's head is tilted to the right), resulting in the viewer's right eye 906 shifting to viewing zone C, while the viewer's left eye 904 remains in viewing zone A. In related autostereo displays, the display would simply present a right image to the right eye 906 through viewing zone C without adjusting for the viewer's head roll. According to the present embodiment of the present invention, however, as the viewer 908 executes the head roll, the camera 910 may not only detect that the right eye 906 shifts to viewing zone C, but may also measure the degree of head roll of the viewer 908. The autostereo display 900 may then warp the right image to adjust for the rolled head position, and may then present the warped right image to the viewing zone C.

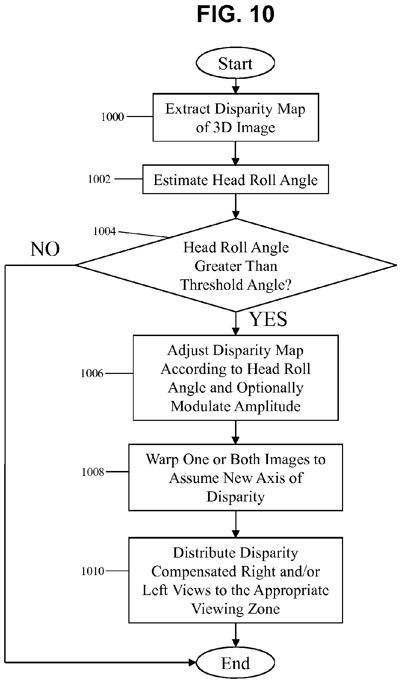

FIG. 10 is a flow chart illustrating a method for adjusting autostereoscopic images according to some embodiments of the present invention.

Referring to FIG. 10, in operation 1000, disparities of a given 3D image are extracted to generate a disparity map. In some embodiments, disparity may be extracted in real-time by utilizing a graphics processing unit (GPU) and rapid searches for corresponding points in left and right images, which are used to create the 3D image. In other embodiments, disparity may be extracted from meta-data that may be included with the 3D content, or may be extracted from meta-data that may be available from the cloud. The extracted disparity map of a 3D image may be dense enough such that there is a disparity associated with every pixel of the 3D image. Moreover, smoothness priors may be utilized to fill in missing values, as will be known to one of ordinary skill in the art.

In operation 1002, the head roll angle of the viewer is detected and estimated. The head roll angle may be estimated in a number of ways. For example, the head roll angle may be estimated by using a horizontal reference axis between the viewer's eyes (e.g., the interocular axis) and by determining the head roll according to the degree of rotational displacement of the viewer's interocular axis. The interocular axis may be an axis that laterally intersects the viewer's eyes and that rotates around a center point between the eyes. However, embodiments of the present invention are not limited to the above, as the reference axis and the axis used to measure the degree of head roll from the reference axis may be any suitable measurement locations, such as vertical axes.

At operation 1004, it is determined whether the degree of the head roll angle is greater than a reference head roll angle or degree. If the detected head roll angle is less than or equal to the reference head roll angle, the process bypasses operations 1006, 1008, and 1010. In this case, the display presents the original uncompensated right view and left view images to the right-eye and left-eye viewing zones of the viewer, and thus the original 3D image is displayed to the viewer, with no adjustment.

In other embodiments of the present invention, the estimation of the head roll angle at operation 1002 and the determination of whether or not the head roll angle is greater than a threshold angle at operation 1004 may occur before the extraction of the disparity map at operation 1000. In this alternative embodiment, if the head roll angle is determined to be less than or equal to the threshold angle, the process ends and the original 3D image is displayed to the respective viewing zones of the viewer. On the other hand, if the head roll angle is determined to be greater than the threshold angle, the process advances to extraction of the disparity map (e.g., operation 1000), adjustment of the disparity map according to the head roll (e.g., operation 1006), application of the adjusted disparity map (e.g., operation 1008), and to distribution of the adjusted right and/or left views to the appropriate viewing zones (e.g., operation 1010).

If the estimated head roll angle is greater than the reference head roll angle, the process continues. As an example, the reference head roll angle may be 10 degrees, and if the estimated head roll angle is 10 degrees or less, the process will simply bypass the head roll compensation steps 1006 through 1010. Alternatively, if the estimated head roll angle is greater than 10 degrees, the process proceeds to operation 1006. However, embodiments of the present invention are not limited to the above, as the reference head roll angle may be any angle, or operation 1004 may be omitted altogether, and operation 1002 may directly precede operation 1006.

In operation 1006, the disparity map extracted in operation 1000 is adjusted or compensated according to the calculated head roll angle. Several different image adjustment techniques have been described in detail above, and thus, their description will not be repeated. The adjusted disparity map is then applied to the right and/or left view of the viewer in operation 1008, which corresponds to the right and/or left image, respectively. In other words, the adjustment may be applied to the right view/ right image, left view/left image, or may be concurrently applied to both of the left view and the right view.

In operation 1010, the compensated right and/or left images are respectively distributed to the appropriate viewing zones for the right and/or left views. In other words, the compensated or uncompensated right view/right image is distributed to the appropriate viewing zone for the viewer's right eye, the compensated or uncompensated left view/left image is distributed to the appropriate viewing zone for the viewer's left eye, or both the left and right images are compensated and distributed to the appropriate viewing zones for the left and right eyes of the viewer, respectively.

Accordingly in some embodiments of the present invention, a 3D image having compensated right and/or left images for a viewer's head roll may be displayed at the appropriate viewing zone for the viewer of an autostereo display. As will be described in further detail below, the above-described compensation techniques for head roll may be applied to viewers at an oblique viewing position with respect to the viewing surface of the autostereo display, in addition to adjusting the images for the oblique viewing position.

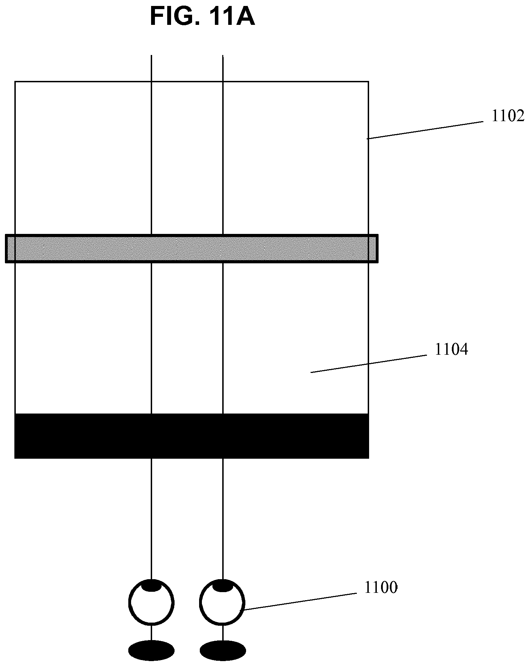

FIGS. 11A through 12D are perspective views illustrating object shearing (or skewing) from a viewing surface of a 3D display respectively corresponding to an oblique viewing position of a viewer with respect to the viewing surface of the 3D display.

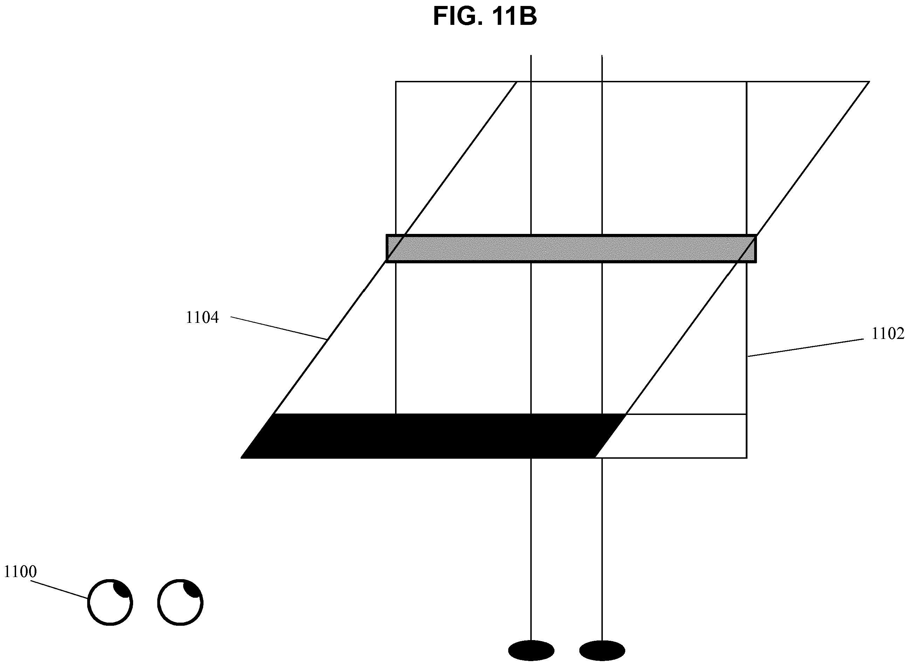

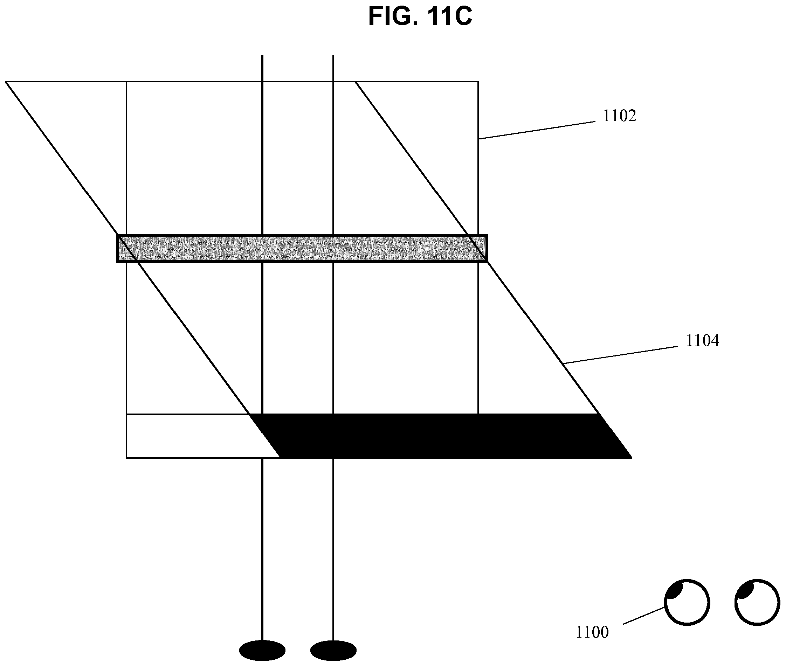

Referring to FIGS. 11A through 11C, when a viewer 1100 is at a position other than directly in front of a 3D display surface 1102 of the autostereo display (as shown in FIGS. 11B and 11C), the object 1104 on the 3D display surface 1102 appears to shear (or skew) toward the viewer 1100, and the scene appears distorted. Thus, vertical disparities and horizontal size differences may be present, even when the viewer's head is in an upright position, and the intended geometry of the object 1104 as when viewed from directly in front of the 3D display surface 1102 (as shown in FIG. 11A) is lost, so the object 1104 appears distorted.

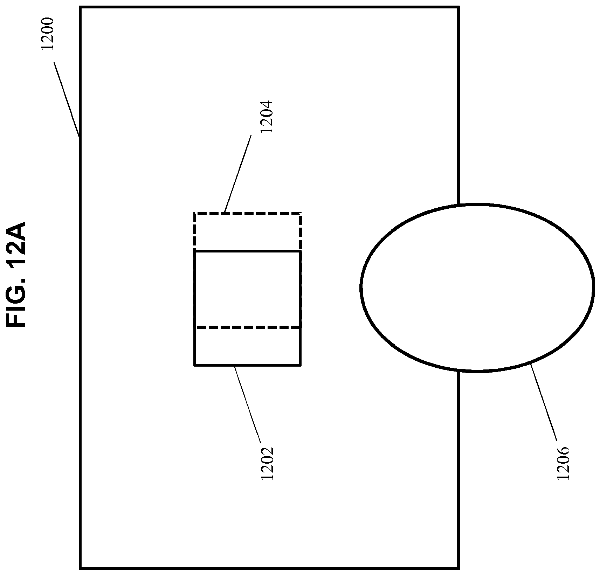

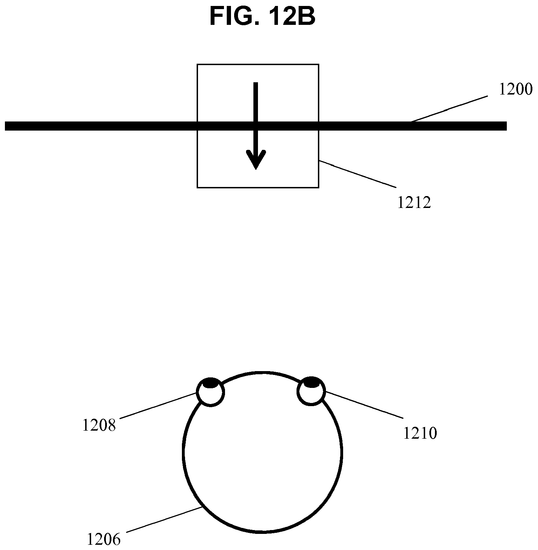

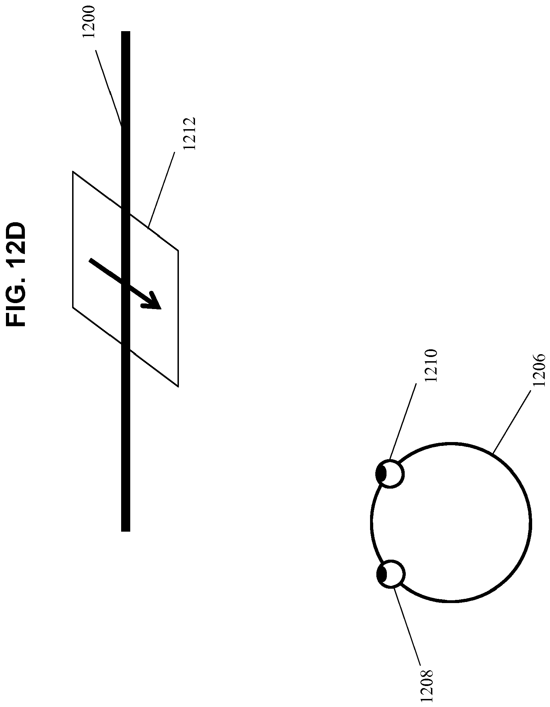

For example, referring to FIGS. 12A and 12B, the 3D display 1200 displays a left image 1202 and a right image 1204 to the viewer 1206. The viewer 1206 is positioned directly in front of the 3D display 1200. FIG. 12A depicts a view from the back of the viewer 1206, and FIG. 12B depicts a view from the top of the viewer 1206 facing a viewing surface of the 3D display 1200.

The left image 1202 and the right image 1204 are respectively displayed to a left eye 1208 and a right eye 1210 of the viewer 1206 from the viewing surface of the 3D display 1200, to depict a 3D image 1212 to the viewer 1206. When the viewer 1206 is positioned directly in front of the 3D display 1200, the 3D image 1212 appears, for example, in the shape of a cube or a rectangular cuboid from the viewing surface of the 3D display 1200.

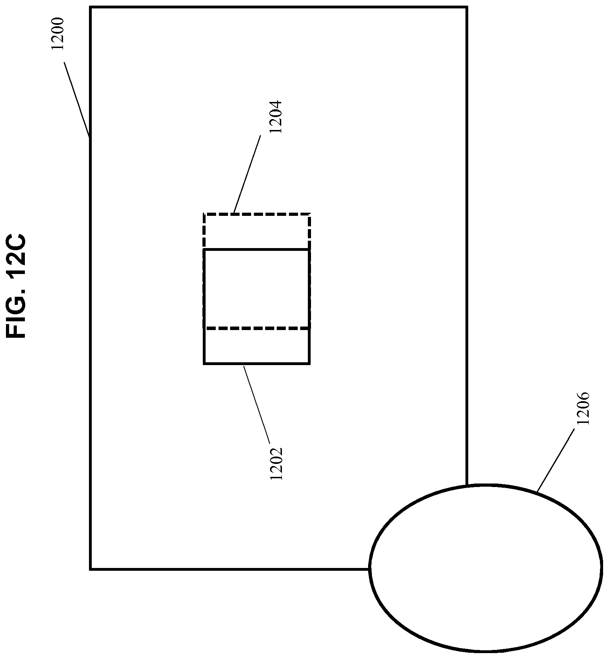

However, as shown in FIGS. 12C through 12D, when the viewer 1206 is positioned at an oblique viewing position (e.g., at a side) with respect to the viewing surface of the 3D display 1200, the 3D image 1212 shears (or skews) toward the viewer 1206, and appears distorted. The oblique viewing position, as used herein, may refer to an oblique viewing angle between the position of the viewer and the display (e.g., the viewing surface of the 3D display), and/or a viewing distance between the position of the viewer and the display. Thus, angles of the 3D image 1212 that were originally, for example, 90 degrees, no longer appear to be 90 degrees.

Accordingly, to compensate for this shearing (or skewing) of the object in the 3D image 1212 when viewing a 3D display from an oblique viewing position, in some embodiments of the present invention, inverse keystone image distortion ("keystone compensation") is applied to the images and distributed to the appropriate viewing zones of the viewer's eyes positioned at the oblique viewing position. As would be known to those having ordinary skill in the art, inverse keystone image distortion shifts the center of projection for the image from the front surface normal to an oblique viewing position. In the corrected image, appropriate foreshortening is applied to the images in both the vertical and horizontal axes.

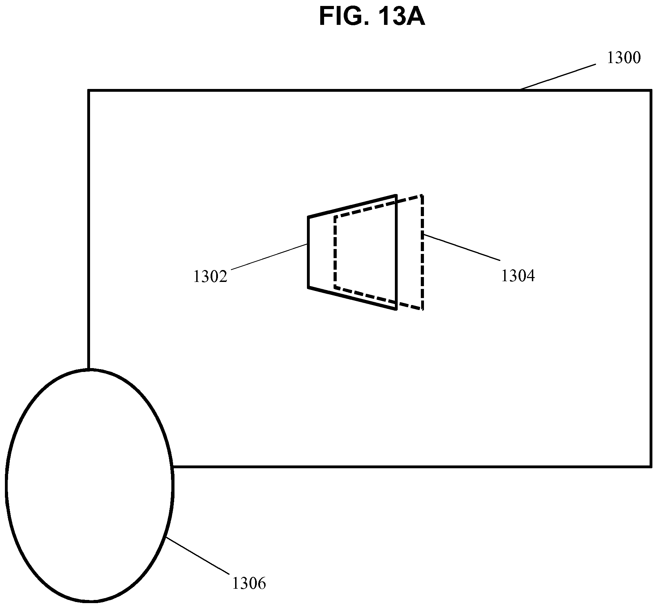

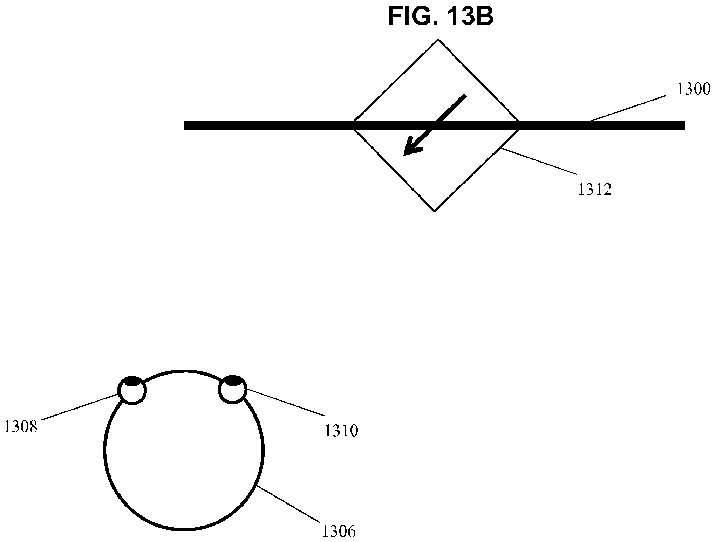

Therefore, as shown in FIGS. 13A and 13B, according to some embodiments of the present invention, the 3D display 1300 displays a left image 1302 with the keystone compensation and a right image 1304 with the keystone compensation to the viewer 1306 positioned at the oblique viewing position with respect to a viewing surface of the 3D display 1300.

Thus, according to some embodiments of the present invention, the object of the 3D image 1312 may retain its intended geometry, with the front surface of the cube or rectangular cuboid facing the viewer, as shown in FIG. 13B. In other words, the front surface of the cube or rectangular cuboid of the 3D image 1312 remains normal to the viewer 1306 and maintains the intended geometry and angles, as if the viewer 1306 was viewing the image while positioned directly in front of the 3D display 1300. Thus, at the conclusion of this keystone compensation, the images 1302 and 1304 formed for the left eye 1308 and the right eye 1310 are the same or substantially the same as if the viewer 1306 was viewing the 3D image 1312 from a central viewing position.

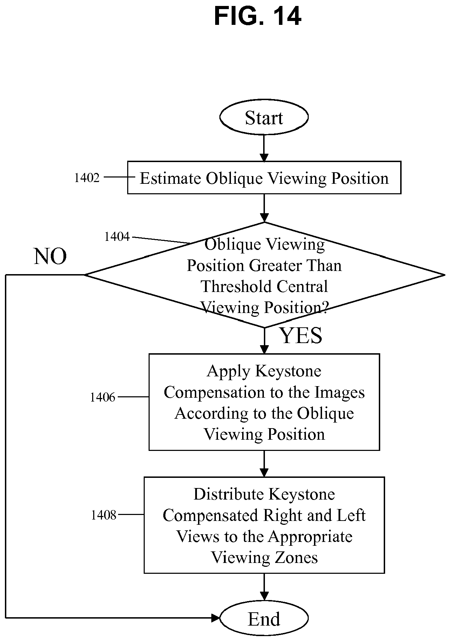

FIG. 14 is a flow chart illustrating a method for applying keystone compensation to autostereoscopic images for a viewer at an oblique viewing position according to some embodiments of the present invention.

Referring to FIG. 14, in operation 1402, the oblique viewing position of the viewer is detected and estimated. The oblique viewing position may be estimated in a number of ways, as would be known to a person having ordinary skill in the art. For example, a position of a viewer's head may be detected by a sensor (e.g., a camera with known angular resolution) coupled to the autostereo display, and an angle from a reference viewing position (e.g., from a predetermined position directly in front of the 3D display) may be calculated. Further, the sensor may detect depth of the viewer to estimate a viewing distance, or may combine statistics for face size and the input from the sensor to estimate the viewing distance.

At operation 1404, it is determined whether the oblique viewing position is greater than a threshold central viewing position. The threshold central viewing position may include a threshold viewing angle and/or a threshold viewing distance between a desired viewing position (e.g., directly in front) of the viewer and the viewing surface of the display. If the oblique viewing position is less than or equal to the threshold central viewing position, the process bypasses operations 1406 and 1408. In this case, the display presents the original uncompensated right and left view image to the right-eye and left-eye viewing zones, respectively, of the viewer, and thus the original 3D image is displayed to the viewer, with no keystone distortion adjustment.

If the estimated oblique viewing position is greater than the threshold central viewing position, the process continues. For example, the threshold viewing angle may be 10 degrees, and if the estimated oblique viewing angle of the oblique viewing position is 10 degrees or less, the process will present the unaltered images to the respective right and left viewing zones. If the estimated oblique viewing angle is greater than 10 degrees, the process proceeds to operation 1406. However, embodiments of the present invention are not limited to the above, as the threshold oblique viewing angle may be any angle, or operation 1404 may be omitted altogether, and operation 1402 may directly precede operation 1406.

In operation 1406, keystone compensation according to the calculated oblique viewing position is applied to the left and right images, as would be known to a person having ordinary skill in the art. For example, the image renderer may use (or utilize) a projection matrix to re-project the image to a slanted surface with respect to the position of the viewer, and could be implemented by a graphics processor.

The adjusted images are then distributed to the right and/or left views of the viewer in operation 1408, which corresponds to the right and/or left viewing zones, respectively. In other words, the adjusted right view/right image is distributed to the appropriate viewing zone for the viewer's right eye, the adjusted left view/left image is distributed to the appropriate viewing zone for the viewer's left eye.

Accordingly, in some embodiments of the present invention, keystone compensation may be applied to the left and right views of the 3D images of an object displayed on an autostereo display, so that the object of the 3D image appears to be rotated to face a viewer at an oblique position of the autostereo display, as if the viewer is viewing the 3D image directly in front of the 3D display.

Although the above embodiments have been primarily directed toward use by a single viewer, in other embodiments of the present invention, stereoscopic images may be adjusted in response to multiple viewers' individual head rolls and/or oblique viewing positions when watching a multi-viewer autostereo display.

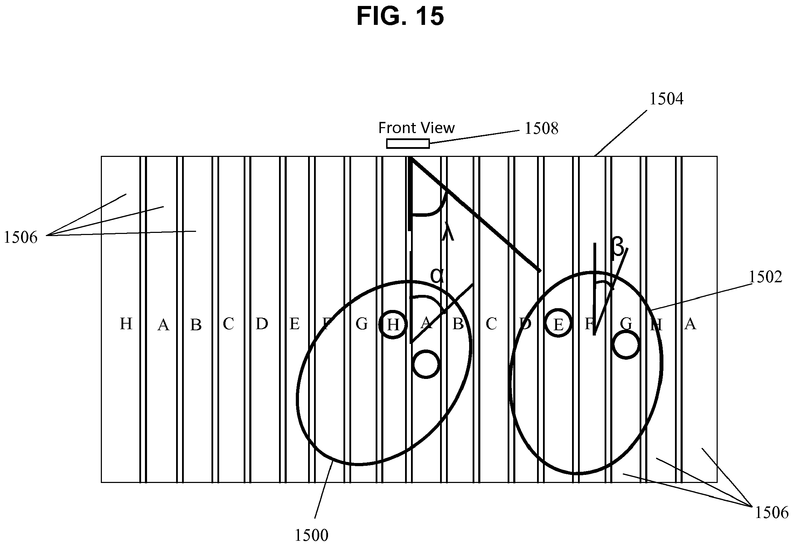

FIG. 15 illustrates an example of multiple viewers of a multi-viewer autostereo display having head roll and oblique viewing positions. FIG. 15 depicts the viewers 1500 and 1502 from the back of the viewers 1500 and 1502 (that is, the display 1504 is shown through outlines representing the viewers 1500 and 1502).

Referring to FIG. 15, a first viewer 1500 and a second viewer 1502 are viewing an autostereo display 1504 having viewing zones 1506. The first viewer 1500 has a left eye in viewing zone H and a right eye in viewing zone A. Further, the first viewer 1500 has a head roll $\alpha$, but is within the threshold central viewing position of the autostereo display 1504. The second viewer 1502 has a left eye in viewing zone E and a right eye in viewing zone G. The second viewer 1502 has a head roll $\beta$, and is at an oblique viewing angle $\lambda$.

In a typical multi-viewer autostereo display without eye tracking systems, the display will typically set the original left (e.g., A) and right (e.g., H) views to extreme viewing positions and interpolate the views between them. Thus, the sign of disparity would be correct, but have reduced magnitude for the second viewer 1502, but would be reversed for the first viewer 1500.

In a multi-viewer autostereo display including an optical tracking sensor 1508 (e.g., a camera), the optical tracking sensor may determine in which viewing zones the eyes of each of the viewer's 1500 and 1502 are located, and may display the left and right images to the appropriate left and right viewing zones for each of the viewers 1500 and 1502.

In some embodiments of the present invention, the optical tracking sensor may determine that the viewing position of the first viewer 1500 is within the threshold central viewing position, and thus, a left and right image may be displayed to the H and A viewing zones of the first viewer 1500, respectively (noting that the left eye and the right eye each see the appropriate image), without any adjustment for head roll or keystone compensation. The optical tracking sensor may determine that the viewing position of the second viewer 1502 is at an oblique viewing position $\lambda$ that is greater than the threshold central viewing position. Accordingly, the left and right images for the second viewer 1502 may be adjusted for keystone compensation corresponding to the oblique viewing angle $\lambda$ as described above with reference to FIGS. 13 through 14, and distributed to the E and G viewing zones, respectively, for the second viewer 1502.

In some embodiments of the present invention, the optical tracking sensor may detect the head roll $\alpha$ for the first viewer 1500 and the head roll $\beta$ for the second viewer 1502. Accordingly, the right and/or left images for the first and second viewers 1500 and 1502 may be respectively adjusted for the detected head rolls $\alpha$ and $\beta$, and may be distributed to the appropriate viewing zones, but without keystone compensation.

In some embodiments of the present invention, the right and left images of the second viewer 1502 may be adjusted for keystone compensation according to the oblique viewing angle $\lambda$, the right and/or left images may also be adjusted for the head roll $\beta$, and the adjusted right and left images may be respectively distributed to viewing zones G and E of the second viewer 1502.

Accordingly, in some embodiments of the present invention, the right and left images for each of the multiple viewers may be adjusted according to each viewer's head roll and/or oblique viewing position.

While the above embodiments of the present invention have been described for use with autostereo displays having a plurality of predetermined (e.g., fixed) viewing zones, as will be described in further detail below, according to other embodiments of the present invention custom viewing zones may be created around the detected position of the viewer's eyes.

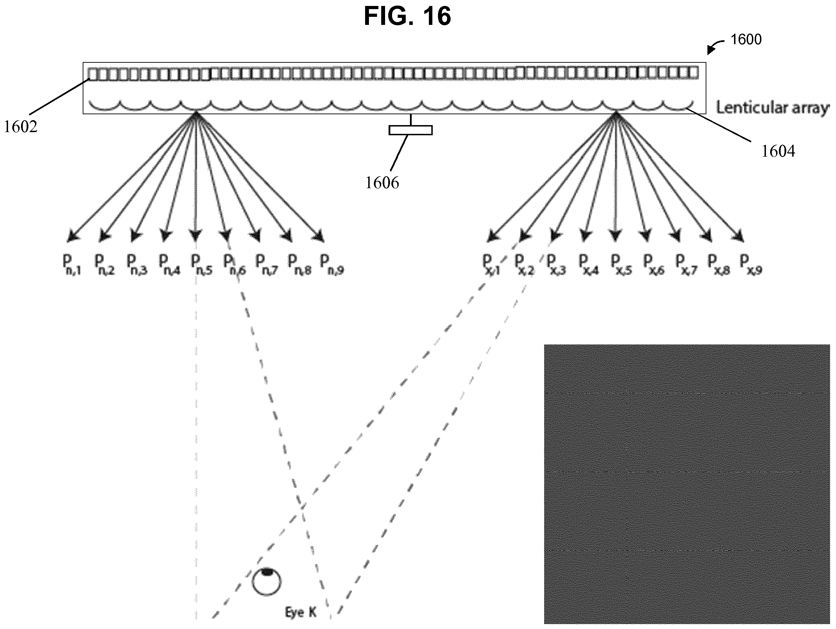

FIG. 16 illustrates a light field display according to some embodiments of the present invention.

Unlike the autostereo displays described above, light field displays offer an enhanced level of control over the direction of light exiting each pixel of the display. These light field displays do not have predetermined viewing zones in the sense described above, but typically show a continuum of viewing angles of the object in the horizontal direction (or in the horizontal and vertical direction). In other words, light field displays emit light in multiple directions and display various viewing angles of the object as the viewer moves in front of the display (e.g., looks around the object), and thus, information corresponding to the position of the viewer or the location of the viewer's eyes are not typically determined.

According to some embodiments of the present invention, however, an appropriate viewing zone (or sweet spot) may be created around the detected positions of the viewer's eyes, and appropriate pixels (or sub-pixels) may be controlled to emit light towards the position of the viewer's eye. In other words, instead of constructing a full light field to display various viewing angles of the object, in some embodiments of the present invention, a custom viewing zone may be created around the detected positions of the viewer's eyes to deliver a stereo image pair corresponding to the custom viewing zones.

Referring to FIG. 16, according to some embodiments of the present invention, a light field display 1600 includes a pixel array 1602 and a lenticular array 1604. The sub-pixels (e.g., $P_{n,1}$-$P_{n,9}$ and $P_{x,1}$-$P_{x,9}$) of the pixel array 1602 may emit light in various directions through the lenticular array 1604.

The light field display 1600 is coupled to an optical tracking sensor 1606. In some embodiments, the optical tracking sensor 1606 may be a camera or other imaging device that is used in conjunction with face detection algorithms to detect a viewing position of a viewer (e.g., corresponding to an oblique viewing position), an orientation of the viewer's head (e.g., corresponding to head roll), position corresponding to the viewer's right eye and left eye, and/or a number of different viewers (e.g., multiple viewers). The position corresponding to the viewer's right eye and left eye may be detected in any suitable manner, for example, the actual positions of the right eye and left eye may be detected, or some other feature of the viewer (e.g., nose, mouth, ears, etc.) may be detected and the position of the right eye and left eye may be estimated (e.g., calculated) therefrom.

Based on the detected eye position K, the light field display 1600 presents the appropriate image intended for that eye (e.g., left view image or right view image) on the appropriate sub-pixels to create a custom viewing zone. The sub-pixels that are not used for the custom viewing zones may not emit light. Thus, only the sub-pixels that are used for the custom viewing zones may display the corresponding images. However, the present invention is not limited thereto.

As shown in FIG. 16, sub-pixels $P_{n,5}$, $P_{n,6}$, $P_{x,2}$, and $P_{x,3}$ emit light towards the detected eye position K, as well as other pixels behind each lenticular array element, and may be used to display an appropriate image to the detected position of the eye K. A small subset of display sub-pixels may be used to display a full image to the detected position of the eye K. There is typically enough divergence from the pixel, that neighboring pixels can be used to achieve a full image without gaps. The sub-pixels that do not direct light towards a position of a detected eye, for example $P_{x,8}$ and $P_{x,9}$, and thus, are not seen by any detected eyes, may not emit light (e.g., may not be rendered). Alternatively, these sub-pixels may be used to create imagery for other viewers or eye positions.

In some embodiments, head roll of the viewer may be detected by the optical tracking sensor 1606, and the image displayed to the detected right and/or left eyes may be adjusted for the detected head roll and displayed to the appropriate custom viewing zones.

In some embodiments, an oblique viewing position of the viewer may be detected by the optical tracking sensor 1606, and the image to be displayed to the detected left and right eyes may be keystone compensated according to the oblique viewing position of the viewer and displayed to the appropriate custom viewing zones.

In some embodiments, head roll and oblique viewing position of the viewer may be detected by the tracking sensor 1606, and the image displayed to the detected left and right eyes may be appropriately adjusted for the detected head roll and keystone compensated.

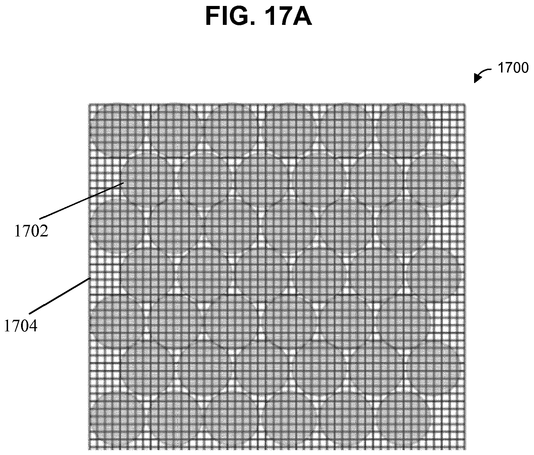

FIGS. 17A through 17B illustrates a light field display according to some embodiments of the present invention.

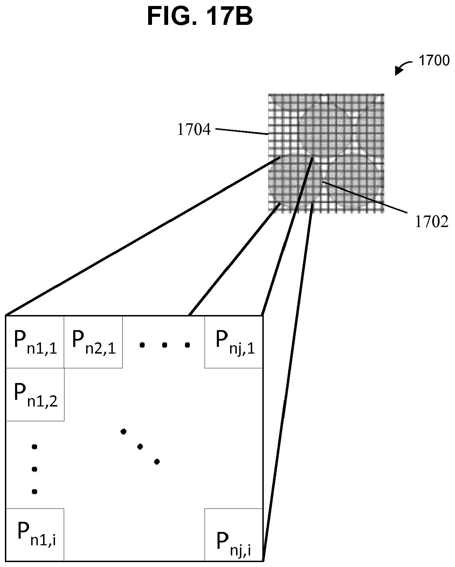

Referring to FIGS. 17A and 17B, the light field display 1700 includes an optical layer or a plurality of localized lenticular features 1702 (e.g., a lenticular array including a plurality of tightly spaced spherically shaped lenses) that are arranged horizontally and vertically along the display surface 1704. The light field display 1700 is coupled to an optical tracking sensor as described above.

As shown in FIG. 17B, each lenticular feature 1702 may include a plurality of sub-pixels $P_{n1,1}$ to $P_{nj,i}$, where j and i are integers, that emit light in various horizontal and vertical directions. Based on the detected eye position, the light field display 1700 presents the appropriate image intended for that eye (e.g., left view image or right view image) on the appropriate sub-pixels to create custom viewing zones.

Because each localized lenticular feature 1702 is capable of emitting light in a vertical direction as well as a horizontal direction, the light field display 1700 may create custom viewing zones in the vertical direction as well as in the horizontal direction, unlike the autostereo displays typically having only horizontal viewing zones. Thus, as will be described in further detail below, custom viewing zones may be created for each detected viewer, even when there are vertically offset viewers. These light field displays can also be used to create custom viewing zones at the correct depth for the viewer's eyes, such that the created custom viewing zones have appropriate horizontal, vertical, and depth to stimulate the designated eye.

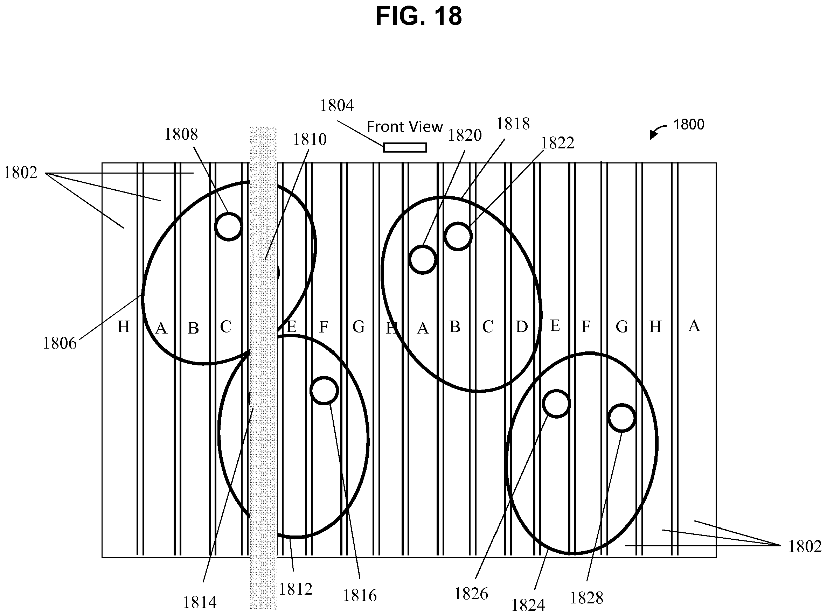

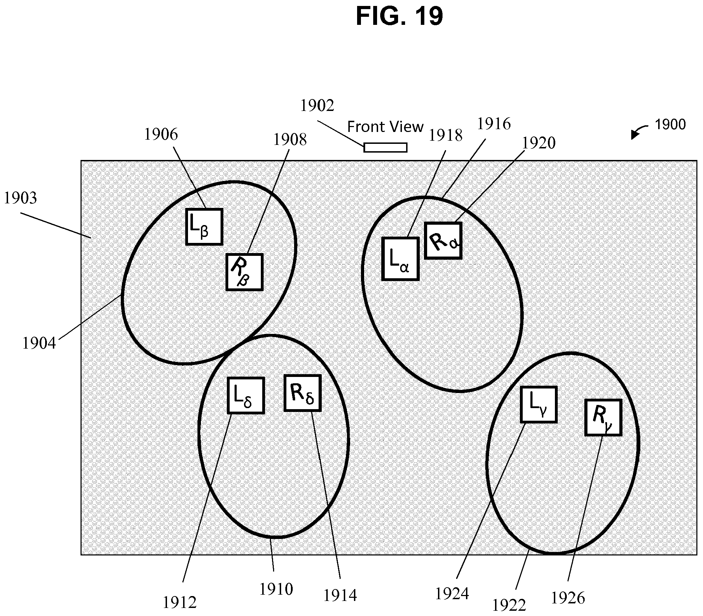

FIG. 18 illustrates a case of vertically offset viewers viewing an autostereo display having defined horizontal viewing zones according to some embodiments of the present invention, and FIG. 19 illustrates custom viewing zones for vertically offset viewers according to some embodiments of the present invention. FIGS. 18 and 19 depict the viewers from the back of the viewers (that is, the display is shown through an outline representing the viewers).

Referring to FIG. 18, an autostereo display 1800 having viewing zones 1802 is coupled to an optical tracking sensor 1804. The optical tracking sensor 1804 detects a first viewer 1806 having a left eye 1808 in viewing zone C and a right eye 1810 in viewing zone D, a second viewer 1812 having a left eye 1814 in viewing zone D and a right eye 1816 in viewing zone F, a third viewer 1818 having a left eye 1820 in viewing zone A and a right eye 1822 in viewing zone B, and a fourth viewer 1824 having a left eye 1826 in viewing zone E and a right eye 1828 in viewing zone G.

The left and right views for the third and fourth viewers 1818 and 1824 may be adjusted for head roll and/or key stone distortion according to some of the embodiments described above, for example, with reference to FIG. 15, since there is no overlap in viewing zones. However, for the first and second viewers 1806 and 1812, there is a vertical offset between the right eye 1810 of the first viewer 1806 and the left eye 1814 of the second viewer 1812. That is, the right eye 1810 of the first viewer 1806 is in the same viewing zone D as the left eye 1814 of the second viewer 1812.

Because the autostereo display 1800 shown in FIG. 18 has defined (e.g., predetermined) horizontal viewing zones, the image displayed in viewing zone D will be the same image for both the first viewer 1806 and the second viewer 1812. Thus, according to some embodiments of the present invention, the image displayed in viewing zone D will either be an adjusted or unadjusted right eye view for the first viewer 1806 or an adjusted or unadjusted left eye view for the second viewer 1812. If the image displayed in viewing zone D is the right eye image for the first viewer 1806, then the second viewer 1812 will have an unpleasant viewing experience. If the image displayed in viewing zone D is the left eye image for the second viewer 1812, then the first viewer 1806 will have an unpleasant viewing experience. In such a case, according to some embodiments of the present invention, the display could revert to showing a 2D image without disparity to the first and second viewers 1806 and 1812.

According to some embodiments of the present invention, the autostereo display may be a display device (e.g., light field display) capable of creating custom viewing zones in both the horizontal and vertical direction (e.g., via a localized lenticular feature having tightly spaced lenses that are arranged two dimensionally). Thus, as shown in FIG. 19, the autostereo display 1900 may be coupled to an optical tracking sensor 1902. The optical tracking sensor 1902 may be a camera or other imaging device that is used in conjunction with face detection algorithms to detect a number of different viewers (e.g., multiple viewers), viewing position of each viewer (e.g., corresponding to an oblique viewing position), an orientation of each of the viewers' head (e.g., corresponding to head roll), and position corresponding to each of the viewers' right eye and left eye. The position corresponding to each of the viewers' right eye and left eye may be detected in any suitable manner, for example, the actual positions of the right eye and left eye may be detected, or some other feature of the viewers (e.g., nose, mouth, ears, etc.) may be detected and the position of the right eye and left eye may be estimated (e.g., calculated) therefrom.

The autostereo display 1900 may also include optical layer 1903 (e.g., a localized lenticular feature), to control the direction of light emitted from sub-pixels of the autostereo display 1900 in a horizontal and vertical direction. Accordingly, the autostereo display 1900 may create custom viewing zones for each detected eye of each detected viewer in both the horizontal and vertical directions.

In other words, a custom viewing zone may be created for the first viewer 1904 around the left eye to show a custom left image 1906 and a custom viewing zone may be created around the right eye to show a custom right image 1908. Both the left image 1906 and the right image 1908 may be keystone distorted according to an oblique viewing angle $\beta$, and the right image 1908 may be adjusted for head roll of the first viewer 1904.

A custom viewing zone may be created for the second viewer 1910 around the left eye to show a custom left image 1912 and a custom viewing zone may be created around the right eye to show a custom right image 1914. Both the left image 1912 and the right image 1914 may be keystone distorted according to an oblique viewing angle $\delta$, and the right image 1914 may be adjusted for head roll of the second viewer 1910.

A custom viewing zone may be created for the third viewer 1916 around the left eye to show a custom left image 1918 and a custom viewing zone may be created around the right eye to show a custom right image 1920. Both the left image 1918 and the right image 1920 may be keystone distorted according to an oblique viewing angle $\alpha$, and the right image 1920 may be adjusted for head roll of the third viewer 1916.

A custom viewing zone may be created for the fourth viewer 1922 around the left eye to show a custom left image 1924 and a custom viewing zone may be created around the right eye to show a custom right image 1926. Both the left image 1924 and the right image 1926 may be keystone distorted according to an oblique viewing angle $\gamma$, and the right image 1926 may be adjusted for head roll of the fourth viewer 1922.

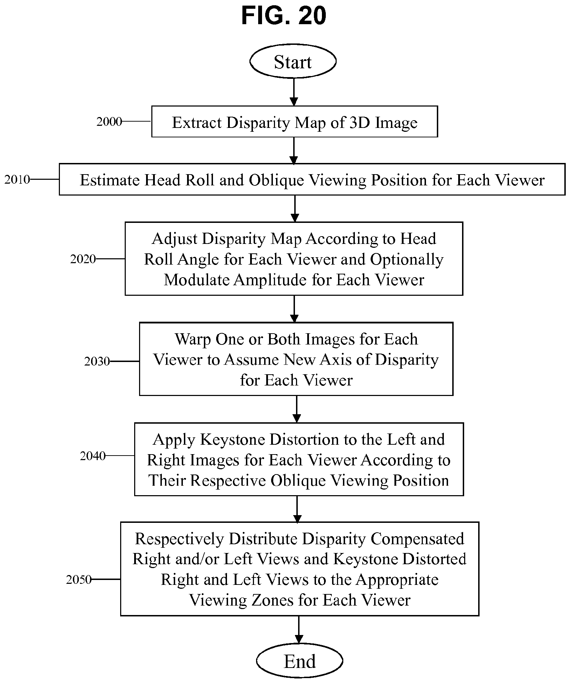

FIG. 20 is a flow chart illustrating a method for applying head roll adjustment and keystone distortion compensation to autostereoscopic images for multiple viewers according to some embodiments of the present invention.

Referring to FIG. 20 in operation 2000, disparities of a given 3D image are extracted to generate a disparity map. As discussed above with reference to FIG. 10, the disparity may be extracted in various different ways, and thus, repeat description thereof will be omitted.

In operation 2010, the head roll and oblique viewing position for each viewer is detected and estimated. As described above with reference to FIGS. 10 and 14, the head roll and oblique viewing position for each of the viewers may be estimated in a number of ways, and thus, repeat description thereof will be omitted. Further, as described above with reference to FIGS. 10 and 14, in some embodiments of the present invention, it may be additionally determined whether or not the oblique viewing position for each of the viewers is greater than a threshold central viewing position, and whether or not the head roll for each of the viewers is greater than a threshold headroll angle. If both are within threshold for any of the viewers, the original stereoscopic images without any adjustment may be distributed to the appropriate left and right viewing zones for those viewers. However, if either or both are greater than the threshold for any of the viewers, appropriate adjustment may be made to the left and/or right images for those viewers.

In other embodiments of the present invention, the estimation of the head roll angles and oblique viewing positions at operation 2010 may occur before the extraction of the disparity map at operation 2000.

In operation 2020, the disparity map extracted in operation 2000 is adjusted or compensated according to the calculated head roll angle for each of the viewers. Several different image adjustment techniques have been described in detail above, and thus, their description will not be repeated. The adjusted disparity map for each viewer is then respectively applied to the right and/or left views for each of the viewers in operation 2030 according to their head roll angles. In other words, the adjustment may be applied to the right view/ right image, left view/left image, or may be concurrently applied to both of the left view and the right view for each viewer according to their head roll angles.

In operation 2040, keystone distortion according to the calculated oblique viewing position for each of the viewers is respectively applied to the left and right images for each viewer, as would be known to a person having ordinary skill in the art. For example, as described above, each of the left and right images may be remapped such that the images project toward the eyes as they would from a central viewing position.

In operation 2050, the compensated right and/or left images for each viewer are respectively distributed to the appropriate (or custom) viewing zones for the right and/or left views. In other words, the compensated or uncompensated right view/right image is distributed to the appropriate viewing zones for each of the viewer's right eye, the compensated or uncompensated left view/left image is distributed to the appropriate viewing zones for each of the viewers' left eye, or both the left and right images are compensated and distributed to the appropriate viewing zones for each of the viewers' left and right eyes, respectively.

Accordingly, the right and left images for one or more viewers of an autostereo display may be adjusted according to the head roll for each viewer and/or oblique viewing angle for each viewer, such that a loss of depth sensation, image crosstalk, eyestrain, and/or discomfort may be prevented or reduced.

In the above figures and described embodiments, the estimating of the disparity in which the disparity is aligned with the interocular axis is described with respect to a format including a stereoscopic image pair. However, as would be realized by a person having ordinary skill in the art, the present invention is not limited thereto, and other formats may include 2D plus depth, wherein disparity estimation is not required and the depth can be converted directly to the disparity map and the disparity applied in the direction of the head roll. Another possible format is left image plus difference, wherein the right image may be reconstructed prior to estimating the disparity map, after which the right image can be processed according to the above-described methods. In any case, the above described embodiments may be applied to reprocess the stereo image data in any received format from known disparity information.

In the above figures and described embodiments, re-rendering of the right eye image in response to head roll has been shown and described, as it is typical in stereo imaging to assign the left eye image as a key image and the right eye image as a secondary image. However, the image-rendering is not limited thereto and could be performed for the left eye instead, or for both the left and right eyes concurrently (e.g., simultaneously).

## Claims

**1.** A display (700, 800, 900, 1200, 1300, 1504, 1600, 1700, 1800, 1900) comprising:

a sensor (708, 1508, 1606, 1804, 1902) coupled to the display (700, 800, 900, 1200, 1300, 1504, 1600, 1700, 1800, 1900) to detect a first position corresponding to at least one eye of a first viewer; and
an image renderer (706) coupled to the sensor (708, 1508, 1606, 1804, 1902) to adjust a first image of a first 3D image pair to be displayed towards the eye of the first viewer according to the first position,
wherein the sensor (708, 1508, 1606, 1804, 1902) is configured to detect a second position corresponding to at least one eye of a second viewer,
wherein the sensor (708, 1508, 1606, 1804, 1902) is further configured to detect positions of both eyes of the first viewer and of the second viewer, and
the image renderer (706) is configured to adjust a second image of a second 3D image pair to be displayed towards the eye of the second viewer according to the second position
**characterized in that**
the display (700, 800, 900, 1200, 1300, 1504, 1600, 1700, 1800, 1900) is configured to create viewing zones for each detected viewer in a vertical direction and in a horizontal direction,
the sensor (708, 1508, 1606, 1804, 1902) is configured to detect a vertical overlap between the eye of the first viewer and the eye of the second viewer, the vertical overlap occurring when the eye of the first viewer is a left eye or a right eye, and the eye of the second viewer is a right eye when the eye of the first viewer is the left eye and in the same viewing zone in the horizontal direction, and the eye of the second viewer is a left eye when the eye of the first viewer is the right eye and in the same viewing zone in the horizontal direction, and
wherein the image renderer (706) is configured to adjust the first image according to the first position, and to adjust the second image according to the second position such that custom viewing zones for each detected eye of each detected viewer in both the horizontal and the vertical direction are created and a corresponding custom image for each custom viewing zone is shown.

**2.** The display of claim 1, wherein the sensor (708, 1508, 1606, 1804, 1902) is configured to detect a headroll of the first viewer corresponding to the first position, and the image renderer (706) is configured to adjust the first image according to the headroll of the first viewer to generate a headroll adjusted first image.

**3.** The display of claim 1 or 2, wherein the sensor (708, 1508, 1606, 1804, 1902) is configured to detect an oblique viewing position corresponding to the first position with respect to the display (700, 800, 900, 1200, 1300, 1504, 1600, 1700, 1800, 1900), and the image renderer (706) is configured to adjust the first image by applying an inverse keystone distortion to the first image according to the first position.

**4.** The display of claim 1, wherein the sensor (708, 1508, 1606, 1804, 1902) is configured to detect a headroll of the first viewer and a headroll of the second viewer, and the image renderer (706) is configured to adjust the first image according to the headroll of the first viewer, and to adjust the second image according to the headroll of the second viewer.

**5.** The display of one of the preceding claims, further comprising:

an optical layer (704, 1903) overlapping the display (700, 800, 900, 1200, 1300, 1504, 1600, 1700, 1800, 1900) and arranged to direct light to be emitted by pixels toward the eye of the first viewer to display the first image.

**6.** The display of claim 5, wherein the optical layer (704, 1903) comprises a lenticular array (1604) comprising a plurality of tightly spaced lenses, and the light to be emitted by the pixels are directed according to a spacing of the lenses.

**7.** The display of claim 5 or 6, wherein a subset of the pixels that are to emit light to reach the eye of the first viewer are utilized to display the first image.

**8.** A method for adjusting a 3D image, the method comprising:

detecting, by a sensor (708, 1508, 1606, 1804, 1902), a first position corresponding to at least one eye of a first viewer; and
adjusting, by an image renderer (706) coupled to the sensor (708, 1508, 1606, 1804, 1902), a first image of a first 3D image pair to be displayed towards the eye of the first viewer according to the first position,
further comprising:

detecting, by the sensor (708, 1508, 1606, 1804, 1902), a second position corresponding to at least one eye of a second viewer;
wherein positions of both eyes of the first viewer and of the second viewer are detected, and

adjusting, by the image renderer (706), a second image of a second 3D image pair to be displayed towards the eye of the second viewer according to the second position.
**characterized by**
creating, by a display (700, 800, 900, 1200, 1300, 1504, 1600, 1700, 1800, 1900), viewing zones for each detected viewer in a vertical direction and in a horizontal direction,
detecting, by the sensor (708, 1508, 1606, 1804, 1902), a vertical overlap between the eye of the first viewer and the eye of the second viewer, the vertical overlap occurring when the eye of the first viewer is a left eye or a right eye, and the eye of the second viewer is a right eye when the eye of the first viewer is the left eye and in the same viewing zone in the horizontal direction, and the eye of the second viewer is a left eye when the eye of the first viewer is the right eye and in the same viewing zone in the horizontal direction, and
adjusting, by the image renderer (706), the first image according to the first position, and the second image according to the second position such that custom viewing zones for each detected eye of each detected viewer in both the horizontal and the vertical direction are created and a corresponding custom image for each custom viewing zone is shown.

**9.** The method of claim 8 further comprising:

detecting, by the sensor (708, 1508, 1606, 1804, 1902), an oblique viewing position corresponding to the first position with respect to the display (700, 800, 900, 1200, 1300, 1504, 1600, 1700, 1800, 1900); and
applying, by the image renderer (706), an inverse keystone distortion to the first image according to the oblique viewing position.

**10.** The method of claim 8 or 9 further comprising:

detecting, by the sensor (708, 1508, 1606, 1804, 1902), a headroll of the first viewer corresponding to the first position; and
adjusting, by the image renderer (706), the first image according to the headroll of the first viewer to generate a headroll adjusted first image.

**11.** The method of claim 8 further comprising:

detecting, by the sensor (708, 1508, 1606, 1804, 1902), a headroll of the first viewer and a headroll of the second viewer; and
adjusting, by the image renderer (706), the first image according to the headroll of the first viewer, and the second image according to the headroll of the second viewer.

**12.** The method of one of the claims 8 to 11 further comprising:

directing, by an optical layer (704, 1903) overlapping the display (700, 800, 900, 1200, 1300, 1504, 1600, 1700, 1800, 1900), light being emitted by pixels toward the eye of the first viewer to display the first image.

**13.** The method of claim 12, wherein the optical layer (704, 1903) comprises a lenticular array (1604) comprising a plurality of tightly spaced lenses, and the directing of the light being emitted by the pixels are due to a spacing of the lenses.

**14.** The method of claim 12 or 13 further comprising:

displaying, by a subset of the pixels that emit light reaching the eye of the first viewer, the first image.

**Patentansprüche**

**1.** Anzeige (700, 800, 900, 1200, 1300, 1504, 1600, 1700, 1800, 1900), umfassend:

einen Sensor (708, 1508, 1606, 1804, 1902), der an die Anzeige (700, 800, 900, 1200, 1300, 1504, 1600, 1700, 1800, 1900) gekoppelt ist, um eine erste Position zu detektieren, die mindestens einem Auge eines ersten Betrachters entspricht; und

eine Bildwiedergabevorrichtung (706), die an den Sensor (708, 1508, 1606, 1804, 1902) gekoppelt ist, um ein erstes Bild eines ersten 3D-Bildpaars einzustellen, das für das Auge des ersten Betrachters gemäß der ersten Position angezeigt werden soll,
wobei der Sensor (708, 1508, 1606, 1804, 1902) konfiguriert ist, um eine zweite Position zu detektieren, die mindestens einem Auge eines zweiten Betrachters entspricht,
wobei der Sensor (708, 1508, 1606, 1804, 1902) ferner konfiguriert ist, um Positionen beider Augen des ersten Betrachters und des zweiten Betrachters zu detektieren und
die Bildwiedergabevorrichtung (706) konfiguriert ist, um ein zweites Bild eines zweiten 3D-Bildpaars einzustellen, das für das Auge des zweiten Betrachters gemäß der zweiten Position angezeigt werden soll,
**dadurch gekennzeichnet, dass**
die Anzeige (700, 800, 900, 1200, 1300, 1504, 1600, 1700, 1800, 1900) konfiguriert ist, um Betrachtungszonen für jeden detektierten Betrachter in einer vertikalen Richtung und in einer horizontalen Richtung zu erzeugen, der Sensor (708, 1508, 1606, 1804, 1902) konfiguriert ist, um eine vertikale Überlappung zwischen dem Auge des ersten Betrachters und dem Auge des zweiten Betrachters zu detektieren, wobei die vertikale Überlappung auftritt, wenn das Auge des ersten Betrachters ein linkes Auge oder ein rechtes Auge ist und das Auge des zweiten Betrachters ein rechtes Auge ist, wenn das Auge des ersten Betrachters das linke Auge ist und sich in der horizontalen Richtung in der gleichen Betrachtungszone befindet, und das Auge des zweiten Betrachters ein linkes Auge ist, wenn das Auge des ersten Betrachters das rechte Auge ist und sich in der horizontalen Richtung in der gleichen Betrachtungszone befindet und wobei die Bildwiedergabevorrichtung (706) konfiguriert ist, um das erste Bild gemäß der ersten Position einzustellen und um das zweite Bild gemäß der zweiten Position einzustellen, sodass benutzerspezifische Betrachtungszonen für jedes detektierte Auge von jedem detektierten Betrachter sowohl in der horizontalen als auch der vertikalen Richtung erzeugt werden und ein entsprechendes benutzerspezifisches Bild für jede benutzerspezifische Betrachtungszone gezeigt wird.

**2.** Anzeige nach Anspruch 1, wobei der Sensor (708, 1508, 1606, 1804, 1902) konfiguriert ist, um eine Kopfneigung des ersten Betrachters zu detektieren, die der ersten Position entspricht, und die Bildwiedergabevorrichtung (706) konfiguriert ist, um das erste Bild gemäß der Kopfneigung des ersten Betrachters einzustellen, um ein gemäß der Kopfneigung eingestelltes erstes Bild zu generieren.

**3.** Anzeige nach Anspruch 1 oder 2, wobei der Sensor (708, 1508, 1606, 1804, 1902) konfiguriert ist, um eine schräge Betrachtungsposition zu detektieren, die der ersten Position in Bezug auf die Anzeige (700, 800, 900, 1200, 1300, 1504, 1600, 1700, 1800, 1900) entspricht, und die Bildwiedergabevorrichtung (706) konfiguriert ist, um das erste Bild einzustellen, indem eine umgekehrte Trapezverzerrung auf das erste Bild gemäß der ersten Position angewendet wird.

**4.** Anzeige nach Anspruch 1, wobei der Sensor (708, 1508, 1606, 1804, 1902) konfiguriert ist, um eine Kopfneigung des ersten Betrachters und eine Kopfneigung des zweiten Betrachters zu detektieren, und die Bildwiedergabevorrichtung (706) konfiguriert ist, um das erste Bild gemäß der Kopfneigung des ersten Betrachters einzustellen, und um das zweite Bild gemäß der Kopfneigung des zweiten Betrachters einzustellen.

**5.** Anzeige nach einem der vorhergehenden Ansprüche, ferner umfassend:

eine optische Schicht (704, 1903), welche die Anzeige (700, 800, 900, 1200, 1300, 1504, 1600, 1700, 1800, 1900) überlappt und angeordnet ist, um Licht zu lenken, das durch Pixel zu dem Auge des ersten Betrachters ausgestrahlt werden soll, um das erste Bild anzuzeigen.

**6.** Anzeige nach Anspruch 5, wobei die optische Schicht (704, 1903) eine Linsenanordnung (1604) umfasst, umfassend eine Vielzahl eng beabstandeter Linsen, und das durch die Pixel auszustrahlende Licht gemäß einer Beabstandung der Linsen gelenkt wird.

**7.** Anzeige nach Anspruch 5 oder 6, wobei eine Teilmenge der Pixel, die Licht ausstrahlen sollen, um das Auge des ersten Betrachters zu erreichen, verwendet wird, um das erste Bild anzuzeigen.

**8.** Verfahren zum Einstellen eines 3D-Bildes, wobei das Verfahren Folgendes umfasst:

Detektieren einer ersten Position, die mindestens einem Auge eines ersten Betrachters entspricht, durch einen Sensor (708, 1508, 1606, 1804, 1902); und
Einstellen eines ersten Bildes eines ersten 3D-Bildpaars, das für das Auge des ersten Betrachters gemäß der ersten Position angezeigt werden soll, durch eine Bildwiedergabevorrichtung (706), die an den Sensor (708, 1508, 1606, 1804, 1902) gekoppelt ist,
ferner umfassend:

Detektieren einer zweiten Position, die mindestens einem Auge eines zweiten Betrachters entspricht, durch den Sensor (708, 1508, 1606, 1804, 1902);
wobei Positionen beider Augen des ersten Betrachters und des zweiten Betrachters detektiert werden und Einstellen eines zweiten Bildes eines zweiten 3D-Bildpaars, das für das Auge des zweiten Betrachters gemäß der zweiten Position angezeigt werden soll, durch die Bildwiedergabevorrichtung (706),
**gekennzeichnet durch**
Erzeugen von Betrachtungszonen für jeden detektierten Betrachter in einer vertikalen Richtung und in einer horizontalen Richtung durch eine Anzeige (700, 800, 900, 1200, 1300, 1504, 1600, 1700, 1800, 1900),
Detektieren einer vertikalen Überlappung zwischen dem Auge des ersten Betrachters und dem Auge des zweiten Betrachters durch den Sensor (708, 1508, 1606, 1804, 1902), wobei die vertikale Überlappung auftritt, wenn das Auge des ersten Betrachters ein linkes Auge oder ein rechtes Auge ist und das Auge des zweiten Betrachters ein rechtes Auge ist, wenn das Auge des ersten Betrachters das linke Auge ist und sich in der horizontalen Richtung in der gleichen Betrachtungszone befindet, und das Auge des zweiten Betrachters ein linkes Auge ist, wenn das Auge des ersten Betrachters das rechte Auge ist und sich in der horizontalen Richtung in der gleichen Betrachtungszone befindet und Einstellen des ersten Bildes gemäß der ersten Position und des zweiten Bildes gemäß der zweiten Position durch die Bildwiedergabevorrichtung (706), sodass benutzerspezifische Betrachtungszonen für jedes detektierte Auge von jedem detektierten Betrachter sowohl in der horizontalen als auch der vertikalen Richtung erzeugt werden und ein entsprechendes benutzerspezifisches Bild für jede benutzerspezifische Betrachtungszone gezeigt wird.

**9.** Verfahren nach Anspruch 8, ferner umfassend:

Detektieren einer schrägen Betrachtungsposition, die der ersten Position in Bezug auf die Anzeige (700, 800, 900, 1200, 1300, 1504, 1600, 1700, 1800, 1900) entspricht, durch den Sensor (708, 1508, 1606, 1804, 1902); und Anwenden einer umgekehrten Trapezverzerrung auf das erste Bild gemäß der schrägen Betrachtungsposition durch die Bildwiedergabevorrichtung (706).

**10.** Verfahren nach Anspruch 8 oder 9, ferner umfassend:

Detektieren einer Kopfneigung des ersten Betrachters, die der ersten Position entspricht, durch den Sensor (708, 1508, 1606, 1804, 1902); und
Einstellen des ersten Bildes gemäß der Kopfneigung des ersten Betrachters, um ein gemäß der Kopfneigung eingestelltes erstes Bild zu generieren, durch die Bildwiedergabevorrichtung (706).

**11.** Verfahren nach Anspruch 8, ferner umfassend:

Detektieren einer Kopfneigung des ersten Betrachters und einer Kopfneigung des zweiten Betrachters durch den Sensor (708, 1508, 1606, 1804, 1902); und
Einstellen des ersten Bildes gemäß der Kopfneigung des ersten Betrachters, und des zweiten Bildes gemäß der Kopfneigung des zweiten Betrachters durch die Bildwiedergabevorrichtung (706).

**12.** Verfahren nach einem der Ansprüche 8 bis 11, ferner umfassend:

Lenken von Licht, das durch Pixel zu dem Auge des ersten Betrachters ausgestrahlt wird, um das erste Bild anzuzeigen, durch eine optische Schicht (704, 1903), welche die Anzeige (700, 800, 900, 1200, 1300, 1504, 1600, 1700, 1800, 1900) überlappt.

**13.** Verfahren nach Anspruch 12, wobei die optische Schicht (704, 1903) eine Linsenanordnung (1604) umfasst, umfassend eine Vielzahl eng beabstandeter Linsen, und das Lenken des Lichts, das durch die Pixel ausgestrahlt wird, aufgrund einer Beabstandung der Linsen geschieht.

**14.** Verfahren nach Anspruch 12 oder 13, ferner umfassend:

Anzeigen des ersten Bildes durch eine Teilmenge der Pixel, die Licht ausstrahlen, welches das Auge des ersten Betrachters erreicht.

## Revendications

1. Dispositif d'affichage (700, 800, 900, 1200, 1300, 1504, 1600, 1700, 1800, 1900) comprenant :

   un capteur (708, 1508, 1606, 1804, 1902) couplé au dispositif d'affichage (700, 800, 900, 1200, 1300, 1504, 1600, 1700, 1800, 1900) pour détecter une première position correspondant à au moins un oeil d'un premier spectateur ; et
   un dispositif de rendu d'images (706) couplé au capteur (708, 1508, 1606, 1804, 1902) pour ajuster une première image d'une première paire d'images 3D à afficher vers l'oeil du premier spectateur en fonction de la première position,
   dans lequel le capteur (708, 1508, 1606, 1804, 1902) est configuré pour détecter une deuxième position correspondant à au moins un oeil d'un deuxième spectateur,
   dans lequel le capteur (708, 1508, 1606, 1804, 1902) est en outre configuré pour détecter les positions des deux yeux du premier spectateur et du deuxième spectateur, et
   le dispositif de rendu d'images (706) est configuré pour ajuster une deuxième image d'une deuxième paire d'images 3D à afficher vers l'oeil du deuxième spectateur en fonction de la deuxième position,
   **caractérisé en ce que**
   le dispositif d'affichage (700, 800, 900, 1200, 1300, 1504, 1600, 1700, 1800, 1900) est configuré pour créer des zones de visualisation pour chaque spectateur détecté dans une direction verticale et dans une direction horizontale,
   le capteur (708, 1508, 1606, 1804, 1902) est configuré pour détecter un chevauchement vertical entre l'oeil du premier spectateur et l'oeil du deuxième spectateur, le chevauchement vertical se produisant lorsque l'oeil du premier spectateur est un oeil gauche ou un oeil droit, et l'oeil du deuxième spectateur est un oeil droit lorsque l'oeil du premier spectateur est l'oeil gauche et dans la même zone de visualisation dans la direction horizontale, et l'oeil du deuxième spectateur est un oeil gauche lorsque l'oeil du premier spectateur est l'oeil droit et dans la même zone de visualisation dans la direction horizontale, et
   dans lequel
   le dispositif de rendu d'images (706) est configuré pour ajuster la première image en fonction de la première position et pour ajuster la deuxième image en fonction de la deuxième position de sorte que des zones de visualisation personnalisées soient créées pour chaque oeil détecté de chaque spectateur détecté aussi bien dans la direction horizontale que verticale et qu'une image personnalisée correspondante soit affichée pour chaque zone de visualisation personnalisée.

2. Dispositif d'affichage selon la revendication 1, dans lequel le capteur (708, 1508, 1606, 1804, 1902) est configuré pour détecter un roulis de la tête du premier spectateur correspondant à la première position et le dispositif de rendu d'images (706) est configuré pour ajuster la première image en fonction du roulis de la tête du premier spectateur pour générer une première image corrigée du roulis de la tête.

3. Dispositif d'affichage selon la revendication 1 ou 2, dans lequel le capteur (708, 1508, 1606, 1804, 1902) est configuré pour détecter une position de visualisation oblique correspondant à la première position par rapport au dispositif d'affichage (700, 800, 900, 1200, 1300, 1504, 1600, 1700, 1800, 1900), et le dispositif de rendu d'images (706) est configuré pour ajuster la première image en appliquant une distorsion trapézoïdale inverse à la première image en fonction de la première position.

4. Dispositif d'affichage selon la revendication 1, dans lequel le capteur (708, 1508, 1606, 1804, 1902) est configuré pour détecter un roulis de la tête du premier spectateur et un roulis de la tête du deuxième spectateur, et le dispositif de rendu d'images (706) est configuré pour ajuster la première image en fonction du roulis de la tête du premier spectateur et pour ajuster la deuxième image en fonction du roulis de la tête du deuxième spectateur.

5. Dispositif d'affichage selon l'une des revendications précédentes, comprenant en outre :

   une couche optique (704, 1903) chevauchant le dispositif d'affichage (700, 800, 900, 1200, 1300, 1504, 1600, 1700, 1800, 1900) et agencée pour diriger une lumière à émettre par des pixels vers l'oeil du premier spectateur pour afficher la première image.

**6.** Dispositif d'affichage selon la revendication 5, dans lequel la couche optique (704, 1903) comprend un réseau lenticulaire (1604) comprenant une pluralité de lentilles étroitement espacées, et la lumière à émettre par les pixels est dirigée en fonction d'un espacement des lentilles.

**7.** Dispositif d'affichage selon la revendication 5 ou 6, dans lequel un sous-ensemble des pixels qui doivent émettre la lumière destinée à atteindre l'oeil du premier spectateur est utilisé pour afficher la première image.

**8.** Procédé pour ajuster une image 3D, lequel procédé consiste à :

détecter, au moyen d'un capteur (708, 1508, 1606, 1804, 1902), une première position correspondant à au moins un oeil d'un premier spectateur ; et
ajuster, au moyen d'un dispositif de rendu d'images (706) couplé au capteur (708, 1508, 1606, 1804, 1902), une première image d'une première paire d'images 3D à afficher vers l'oeil du premier spectateur en fonction de la première position, et consiste en outre à :

détecter, au moyen du capteur (708, 1508, 1606, 1804, 1902), une deuxième position correspondant à au moins un oeil d'un deuxième spectateur ;
les positions des deux yeux du premier spectateur et du deuxième spectateur étant détectées, et
ajuster, au moyen du dispositif de rendu d'images (706), une deuxième image d'une deuxième paire d'images 3D à afficher vers l'oeil du deuxième spectateur en fonction de la deuxième position,
**caractérisé en ce qu'**il consiste à
créer, au moyen d'un dispositif d'affichage (700, 800, 900, 1200, 1300, 1504, 1600, 1700, 1800, 1900), des zones de visualisation pour chaque spectateur détecté dans une direction verticale et dans une direction horizontale,
détecter, au moyen du capteur (708, 1508, 1606, 1804, 1902), un chevauchement vertical entre l'oeil du premier spectateur et l'oeil du deuxième spectateur, le chevauchement vertical se produisant lorsque l'oeil du premier spectateur est un oeil gauche ou un oeil droit, et l'oeil du deuxième spectateur est un oeil droit lorsque l'oeil du premier spectateur est l'oeil gauche et dans la même zone de visualisation dans la direction horizontale, et l'oeil du deuxième spectateur est un oeil gauche lorsque l'oeil du premier spectateur est l'oeil droit et dans la même zone de visualisation dans la direction horizontale, et
ajuster, au moyen du dispositif de rendu d'images (706), la première image en fonction de la première position et la deuxième image en fonction de la deuxième position de sorte que des zones de visualisation personnalisées soient créées pour chaque oeil détecté de chaque spectateur détecté aussi bien dans la direction horizontale que verticale et qu'une image personnalisée correspondante soit affichée pour chaque zone de visualisation personnalisée.

**9.** Procédé selon la revendication 8, consistant en outre à :

détecter, au moyen du capteur (708, 1508, 1606, 1804, 1902), une position de visualisation oblique correspondant à la première position par rapport au dispositif d'affichage (700, 800, 900, 1200, 1300, 1504, 1600, 1700, 1800, 1900) ; et
appliquer, au moyen du dispositif de rendu d'images (706), une distorsion trapézoïdale inverse à la première image en fonction de la position de visualisation oblique.

**10.** Procédé selon la revendication 8 ou 9, consistant en outre à :

détecter, au moyen du capteur (708, 1508, 1606, 1804, 1902), un roulis de la tête du premier spectateur correspondant à la première position ; et
ajuster, au moyen du dispositif de rendu d'images (706), la première image en fonction du roulis de la tête du premier spectateur pour générer une première image corrigée du roulis de la tête.

**11.** Procédé selon la revendication 8, consistant en outre à :

détecter, au moyen du capteur (708, 1508, 1606, 1804, 1902), un roulis de la tête du premier spectateur et un roulis de la tête du deuxième spectateur ; et
ajuster, au moyen du dispositif de rendu d'images (706), la première image en fonction du roulis de la tête du premier spectateur et la deuxième image en fonction du roulis de la tête du deuxième spectateur.

**12.** Procédé selon l'une des revendications 8 à 11, consistant en outre à :

diriger, au moyen d'une couche optique (704, 1903) chevauchant le dispositif d'affichage (700, 800, 900, 1200, 1300, 1504, 1600, 1700, 1800, 1900), une lumière émise par des pixels vers l'oeil du premier spectateur pour afficher la première image.

**13.** Procédé selon la revendication 12, dans lequel la couche optique (704, 1903) comprend un réseau lenticulaire (1604) comprenant une pluralité de lentilles étroitement espacées, et la direction de la lumière émise par les pixels dépend d'un espacement des lentilles.

**14.** Procédé selon la revendication 12 ou 13, consistant en outre à :

afficher, au moyen d'un sous-ensemble des pixels qui émettent la lumière qui atteint l'oeil du premier spectateur, la première image.

100
106
110
102
112
108
104
114

FIG. 1A

100
102
112
104

FIG. 1B

FIG. 2A
202
200
204
206
0 deg head roll
20 deg head roll
45 deg head roll
90 deg head roll
FIG. 2B
Full compensation
up

202
200
204
206
0 deg head roll
20 deg head roll
45 deg head roll
90 deg head roll
Depth attenuating compensation up

FIG. 3A

FIG. 3B

0 deg head roll
20 deg head roll
45 deg head roll
90 deg head roll
200
202
204
206
Image Rotation
up

FIG. 4A

FIG. 4B

500
502
504
506
$A_R$
$(X_{r2}, Y_{r2})$
$(X_{r1}, Y_{r1})$
$(X_1, Y_1)$
Y

FIG. 5

602
$A_R$
$(X_{r2}, Y_{r2})$
$(X_{r1}, Y_{r1})$
$(X_l, Y_l)$
Y
606
604
600

FIG. 6

700
702
704
706
708
710
712
714

FIG. 7

Pixel array
Lenticular array
800
802
804
R
L
Top View

FIG. 8

Top View
Autostereoscopic Display
900
910
906
904
902
908
C
D
A
B
C
D
A

FIG. 9A

900
902
904
906
908
910
Front View
A
B
C
D

FIG. 9B

Top View
Autostereoscopic Display
900
910
906
A
D
C
B
A
D
C
904
908
902

FIG. 9C

FIG. 9D
Front View
910
900
906
902
908
904
902
A
D
C
B
A
D
C

FIG. 10
Start
Extract Disparity Map of 3D Image
1000
Estimate Head Roll Angle
1002
Head Roll Angle Greater Than Threshold Angle?
1004
YES
NO
Adjust Disparity Map According to Head Roll Angle and Optionally Modulate Amplitude
1006
Warp One or Both Images to Assume New Axis of Disparity
1008
Distribute Disparity Compensated Right and/or Left Views to the Appropriate Viewing Zone
1010
End

1102
1104
1100

FIG. 11A

FIG. 11B

1104
1102
1100

1102
1104
1100

FIG. 11C

1200
1204
1202
1206

FIG. 12A

FIG. 12B

1200
1212

1210
1208
1206

1200
1204
1202
1206

FIG. 12C

1200
1212

FIG. 12D

1210
1206
1208

FIG. 13A
1300
1304
1302
1306

1300
1312

FIG. 13B

1310
1306
1308

FIG. 14

Start
Estimate Oblique Viewing Position
1402
Oblique Viewing Position Greater Than Threshold Central Viewing Position?
1404
YES
NO
Apply Keystone Compensation to the Images According to the Oblique Viewing Position
1406
Distribute Keystone Compensated Right and Left Views to the Appropriate Viewing Zones
1408
End

Front View
1500
1502
1504
1506
1508
α
β
γ
A
B
C
D
E
F
G
H

FIG. 15

FIG. 16
1600
Lenticular array
1604
1606
1602
P n,1
P n,2
P n,3
P n,4
P n,5
P n,6
P n,7
P n,8
P n,9
P x,1
P x,2
P x,3
P x,4
P x,5
P x,6
P x,7
P x,8
P x,9
Eye K

1700
1702
1704

FIG. 17A

FIG. 17B
1700
1702
1704
$P_{n1,1}$
$P_{n2,1}$
$P_{nj,1}$
$P_{n1,2}$
$P_{n1,i}$
$P_{nj,i}$

FIG. 18
1800
Front View
1802
1804
1806
1808
1810
1812
1814
1816
1818
1820
1822
1824
1826
1828
A
H
G
F
E
D
C
B
A
H
G
F
E
C
B
A
H

1900
Front View
1902
1903
1904
1906
1908
1910
1912
1914
1916
1918
1920
1922
1924
1926
$R_\alpha$
$L_\alpha$
$R_\beta$
$L_\beta$
$R_\gamma$
$L_\gamma$
$R_\delta$
$L_\delta$

FIG. 19

FIG. 20
Start
Extract Disparity Map of 3D Image
2000
Estimate Head Roll and Oblique Viewing Position for Each Viewer
2010
Adjust Disparity Map According to Head Roll Angle for Each Viewer and Optionally Modulate Amplitude for Each Viewer
2020
Warp One or Both Images for Each Viewer to Assume New Axis of Disparity for Each Viewer
2030
Apply Keystone Distortion to the Left and Right Images for Each Viewer According to Their Respective Oblique Viewing Position
2040
Respectively Distribute Disparity Compensated Right and/or Left Views and Keystone Distorted Right and Left Views to the Appropriate Viewing Zones for Each Viewer
2050
End

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2835972 A2
- US 20120038635 A1